# EUROPEAN PATENT APPLICATION

(11) **EP 4 550 708 A1**
(43) Date of publication of application: **07.05.2025**
(21) Application number: 22948322.7
(22) Date of filing: 28.06.2022
(51) Int. Cl.: H04L 5/00

(54) **METHOD FOR DETERMINING CHANNEL STATE INFORMATION (CSI) FEEDBACK, AND APPARATUS THEREOF**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/102072
(87) International publication number: WO 2024/000202

(57) **Abstract**

The embodiments of the disclosure disclose a method for determining a channel state information (CSI) feedback indication, and an apparatus thereof, applicable in the technical field of communication, wherein the method performed by a network device comprises: sending first indication information to a terminal device, wherein the first indication information is used for indicating to the terminal device a resource unit within CSI feedback on the basis of which resource unit a basis vector is selected. It is thus ensured that a terminal device and a network device maintain the same understanding of the resource unit within CSI feedback on the basis of which resource unit a basis vector is selected, thereby improving the transmission performance of multi-TRP-based coherent joint transmission.

## Description

### TECHNICAL FIELD

The disclosure relates to a field of communication technologies, and particularly to a method and an apparatus for determining a channel state information (CSI) feedback.

### BACKGROUND

For a single transmission and reception point (TRP), in a channel state information (CSI) feedback, there needs to report a space domain (SD) basis vector and a frequency domain (FD) basis vector selected by a terminal based on a CSI reference signal (RS) resource. For multiple TRPs, due to different positions of the multiple TRPs, it is a problem that needs to be solved whether to feed a SD basis selected and/or a FD basis selected back to each TRP or each TRP group in a CSI feedback.

### SUMMARY

Embodiments of the disclosure provide a method and an apparatus for determining a channel state information (CSI) feedback.

In a first aspect, an embodiment of the disclosure provides a method for determining a CSI feedback. The method is performed by a network device. The method includes: sending first indication information to a terminal, in which the first indication information is used to indicate a resource unit based on which a basis vector is selected in the CSI feedback to the terminal, and the basis vector includes at least one of a beam basis vector or a frequency domain basis vector. In the disclosure, the network device indicates the resource unit based on which the basis vector is selected in the CSI feedback to the terminal. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

In a second aspect, another embodiment of the disclosure provides a method for determining a CSI feedback. The method is performed by a terminal. The method includes: receiving first indication information sent by a network device, in which the first indication information is used to indicate a resource unit based on which a basis vector is selected in the CSI feedback to the terminal, and the basis vector includes at least one of a beam basis vector or a frequency domain basis vector. In the disclosure, the terminal sends the resource unit based on which the basis vector is selected in the CSI feedback to the network device. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

In a third aspect, another embodiment of the disclosure provides a method for determining a CSI feedback. The method is performed by a terminal. The method include: sending first indication information to a network device, in which the first indication information is used to indicate a resource unit based on which a basis vector is selected in the CSI feedback to the network device, and the basis vector includes at least one of a beam basis vector or a frequency domain basis vector. In the disclosure, the terminal sends the resource unit based on which the basis vector is selected in the CSI feedback to the network device. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

In a fourth aspect, another embodiment of the disclosure provides a method for determining a CSI feedback. The method is performed by a network device. The method includes: receiving first indication information sent by a terminal, in which the first indication information is used to indicate a resource unit based on which a basis vector is selected in the CSI feedback to the network device, and the basis vector includes at least one of a beam basis vector or a frequency domain basis vector. In the disclosure, the network device receives the resource unit based on which the basis vector is selected in the CSI feedback, sent by the terminal. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

In a fifth aspect, an embodiment of the disclosure provides a communication device, including: a transceiver module, configured to send first indication information to a terminal, in which the first indication information is used to indicate a resource unit based on which a basis vector is selected in the CSI feedback to the terminal, and the basis vector includes at least one of a beam basis vector or a frequency domain basis vector.

In a sixth aspect, an embodiment of the disclosure provides a communication device, including: a transceiver module, configured to receive first indication information sent by a network device, in which the first indication information is used to indicate a resource unit based on which a basis vector is selected in the CSI feedback to a terminal, and the basis vector includes at least one of a beam basis vector or a frequency domain basis vector.

In a seventh aspect, an embodiment of the disclosure provides a communication device, including: a transceiver module, configured to send first indication information to a network device, in which the first indication information is used to indicate a resource unit based on which a basis vector is selected in the CSI feedback to the network device, and the basis vector includes at least one of a beam basis vector or a frequency domain basis vector.

In an eighth aspect, an embodiment of the disclosure provides a communication device, including: a transceiver, configured to receive first indication information sent by a terminal, in which the first indication information is used to indicate a resource unit based on which a basis vector is selected in the CSI feedback to the network device, and the basis vector includes at least one of a beam basis vector or a frequency domain basis vector.

In a ninth aspect, an embodiment of the disclosure provides a communication device, including a processor. When the processor calls a computer program in a memory, the method in the first aspect is performed.

In a tenth aspect, an embodiment of the disclosure provides a communication device, including a processor. When the processor calls a computer program in a memory, the method in the second aspect is performed.

In an eleventh aspect, an embodiment of the disclosure provides a communication device, including a processor. When the processor calls a computer program in a memory, the method in the third aspect is performed.

In a twelfth aspect, an embodiment of the disclosure provides a communication device, including a processor. When the processor calls a computer program in a memory, the method in the fourth aspect is performed.

In a thirteenth aspect, an embodiment of the disclosure provides a communication device, including a processor and a memory for storing a computer program. The processor is configured to execute the computer program in the memory to cause the communication device to execute the method in the first aspect.

In a fourteenth aspect, an embodiment of the disclosure provides a communication device, including a processor and a memory for storing a computer program. The processor is configured to execute the computer program in the memory to cause the communication device to execute the method in the second aspect.

In a fifteenth aspect, an embodiment of the disclosure provides a communication device, including a processor and a memory for storing a computer program. The processor is configured to execute the computer program in the memory to cause the communication device to execute the method in the third aspect.

In a sixteenth aspect, an embodiment of the disclosure provides a communication device, including a processor and a memory for storing a computer program. The processor is configured to execute the computer program in the memory to cause the communication device to execute the method in the fourth aspect.

In a seventeenth aspect, an embodiment of the disclosure provides a communication device, including a processor and an interface circuit for receiving code instructions and sending the code instructions to the processor. The processor is configured to run the code instructions to cause the device to execute the method in the first aspect.

In an eighteenth aspect, an embodiment of the disclosure provides a communication device, including a processor and an interface circuit for receiving code instructions and sending the code instructions to the processor. The processor is configured to run the code instructions to cause the device to execute the method in the second aspect.

In a nineteenth aspect, an embodiment of the disclosure provides a communication device, including a processor and an interface circuit for receiving code instructions and sending the code instructions to the processor. The processor is configured to run the code instructions to cause the device to execute the method in the third aspect.

In a twentieth aspect, an embodiment of the disclosure provides a communication device, including a processor and an interface circuit for receiving code instructions and sending the code instructions to the processor. The processor is configured to run the code instructions to cause the device to execute the method in the fourth aspect.

In a twenty-first aspect, an embodiment of the disclosure provides a determining system, including the communication device in the fifth aspect and the communication device in the sixth aspect, or including the communication device in the seventh aspect and the communication device in the eighth aspect, or including the communication device in the ninth aspect and the communication device in the tenth aspect, or including the communication device in the eleventh aspect and the communication device in the twelfth aspect, or including the communication device in the thirteen aspect and the communication device in the fourteenth aspect, or including the communication device in the fifteenth aspect and the communication device in the sixteenth aspect, or including the communication device in the seventeenth aspect and the communication device in the eighteenth aspect, or including the communication device in the nineteenth aspect and the communication device in the twentieth aspect.

In a twenty-second aspect, an embodiment of the disclosure provides a computer readable storage medium for storing instructions employed by a terminal. When the instructions are performed, the terminal is caused to perform the method in the first aspect.

In a twenty-third aspect, an embodiment of the disclosure provides a computer readable storage medium for storing instructions employed by a network device. When the instructions are performed, the network device is caused to perform the method in the second aspect.

In a twenty-fourth aspect, an embodiment of the disclosure provides a computer readable storage medium for storing instructions employed by a terminal. When the instructions are performed, the terminal is caused to perform the method in the third aspect.

In a twenty-fifth aspect, an embodiment of the disclosure provides a computer readable storage medium for storing instructions employed by a network device. When the instructions are performed, the network device is caused to perform the method in the fourth aspect.

In a twenty-sixth aspect, an embodiment of the disclosure provides a computer program product including a computer program. The computer program is run in a computer to enable the computer to perform the method in the first aspect.

In a twenty-seventh aspect, an embodiment of the disclosure provides a computer program product including a computer program. The computer program is run in a computer to enable the computer to perform the method in the second aspect.

In a twenty-eighth aspect, an embodiment of the disclosure provides a computer program product including a computer program. The computer program is run in a computer to enable the computer to perform the method in the third aspect.

In a twenty-ninth aspect, an embodiment of the disclosure provides a computer program product including a computer program. The computer program is run in a computer to enable the computer to perform the method in the fourth aspect.

In a thirtieth aspect, an embodiment of the disclosure provides a chip system, including at least one processor and at least one interface for supporting a terminal in performing functions in the first aspect, the second aspect, the third aspect, or the fourth aspect, for example, determining or processing at least one of data and information in the above method. In a possible design, the chip system further includes a memory for saving necessary computer programs and data of the terminal. The chip system may be combined by chips, and may also include chips and other discrete devices.

In a thirty-first aspect, an embodiment of the disclosure provides a computer program. The computer program is run on a computer to enable the computer to perform the method in the first aspect, the method in the second aspect, the method in the third aspect, or the method in the fourth aspect.

### BRIEF DESCRIPTION OF THE DRAWINGS

In order to illustrate technical solutions of embodiments or the Background of the disclosure more clearly, a brief description of drawings used in the embodiments or background of the disclosure is given below.
FIG. 1 is a schematic diagram illustrating an architecture of a communication system according to an embodiment of the disclosure.
FIG. 2 is a flow chart illustrating a method for determining a channel state information (CSI) feedback according to an embodiment of the disclosure.
FIG. 3 is a flow chart illustrating a method for determining a channel state information (CSI) feedback according to another embodiment of the disclosure.
FIG. 3a is a flow chart illustrating a method for determining a channel state information (CSI) feedback according to another embodiment of the disclosure.
FIG. 4 is a flow chart illustrating a method for determining a channel state information (CSI) feedback according to a still yet another embodiment of the disclosure.
FIG. 4a is a flow chart illustrating a method for determining a channel state information (CSI) feedback according to another embodiment of the disclosure.
FIG. 5 is a flow chart illustrating a method for determining a channel state information (CSI) feedback according to a still yet another embodiment of the disclosure.
FIG. 6 is a flow chart illustrating a method for determining a channel state information (CSI) feedback according to a still yet another embodiment of the disclosure.
FIG. 7 is a flow chart illustrating a method for determining a channel state information (CSI) feedback according to a still yet another embodiment of the disclosure.
FIG. 8 is a flow chart illustrating a method for determining a channel state information (CSI) feedback according to a still yet another embodiment of the disclosure.
FIG. 9 is a flow chart illustrating a method for determining a channel state information (CSI) feedback according to a still yet another embodiment of the disclosure.
FIG. 10 is a flow chart illustrating a method for determining a channel state information (CSI) feedback according to a still yet another embodiment of the disclosure.
FIG. 11 is a flow chart illustrating a method for determining a channel state information (CSI) feedback according to a still yet another embodiment of the disclosure.
FIG. 12 is a flow chart illustrating a method for determining a channel state information (CSI) feedback according to a still yet another embodiment of the disclosure.
FIG. 13 is a flow chart illustrating a method for determining a channel state information (CSI) feedback according to a still yet another embodiment of the disclosure.
FIG. 14 is a flow chart illustrating a method for determining a channel state information (CSI) feedback according to a still yet another embodiment of the disclosure.
FIG. 15 is a flow chart illustrating a method for determining a channel state information (CSI) feedback according to a still yet another embodiment of the disclosure.
FIG. 16 is a flow chart illustrating a method for determining a channel state information (CSI) feedback according to a still yet another embodiment of the disclosure.
FIG. 17 is a block diagram illustrating a communication device according to embodiments of the disclosure.
FIG. 18 is a block diagram illustrating a communication device according to another embodiment of the disclosure.
FIG. 19 is a block diagram illustrating a chip according to embodiments of the disclosure.

### DETAILED DESCRIPTION

Reference will now be made in detail to embodiments, examples of which are illustrated in the accompanying drawings. The following description refers to the accompanying drawings in which the same numbers in different accompanying drawings represent the same or similar elements unless otherwise represented. The implementations set forth in the description of following embodiments do not represent all implementations consistent with the disclosure. Instead, they are merely examples of apparatuses and methods consistent with aspects related to the disclosure as recited in the appended claims.

In order to facilitate understanding, terms in the disclosure are introduced first.
1. Transmission configuration indication (TCI)
   The TCI is configured to notify a terminal of which synchronization signal block (SSB) or channel state information reference signal (CSI RS) sent by a network device is co-located with a demodulation reference signal corresponding to a physical downlink control channel (PDCCH) or a physical downlink shared channel (PDSCH); or notify a terminal that which reference signal (such as an SRS) sent by the terminal or which SSB or CSI RS sent by the base station is co-located with a demodulation reference signal corresponding to a physical uplink control channel (PUCCH) or a physical uplink shared channel (PUSCH). The Quasi-co-located includes one of the following transmission parameters: an average delay, a delay spread, a Doppler shift, a Doppler spread, spatial relation information, and a spatial reception parameter.
2. Transmission reception point (TRP)
   The TRP is equivalent to a conventional base station, but in some cases, a cell may be covered by more than one TRP, but covered jointly by multiple TRPs.
3. Downlink control information (DCI)
   The DCI carried by the PDCCH and sent by the network device to the terminal includes an uplink and downlink resource allocation, hybrid automatic retransmission request (HARQ) information, a power control, etc.
4. Reference signal (RS)
   The RS is a "pilot" signal, which is a known signal provided by a transmitter to a receiver for a channel estimation or a channel detection, and may be used for a coherent detection and demodulation, a beam measurement, a CSI measurement of a terminal, or a coherent detection and monitoring, or a channel quality measurement of a network device.
5. Basis vector

The basis vector includes a space domain (SD) basis and/or a frequency domain (FD) basis. The SD basis, also known as a beam basis vector or a beam, indicates the beam selected by the terminal, for example, L beams are selected in N1*N2 ports. The FD basis indicates the frequency domain basis vector selected by the terminal, for example, M frequency domain basis vectors are selected from N3 frequency domain basis vectors.

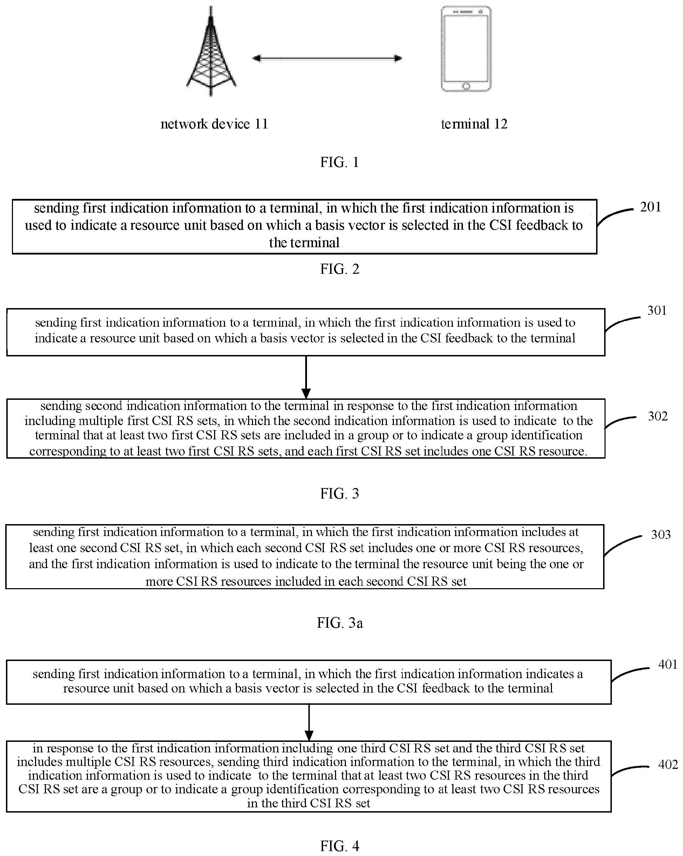

Please refer to FIG. 1, which is a schematic diagram illustrating an architecture of a communication system according to an embodiment of the disclosure. The communication system may include, but is not limited to, a network device, such as a TRP and a terminal. The number and form of the device illustrated in FIG. 1 are for example and do not constitute a limitation on embodiments of the disclosure, and may include two or more network devices and two or more terminals in a practical application. The communication system illustrated in FIG. 1 includes a network device 11 and a terminal 12 as an example.

It should be noted that a technical solution of embodiments of the disclosure may be applied to various communication systems, such as, a long term evolution (LTE) system, a 5th generation (5G) mobile communication system, a 5G new radio (NR) system, or other new mobile communication systems in the future.

The network device 11 in embodiments of the disclosure includes an evolved NodeB (eNB), a TRP, a next generation NodeB (gNB) in an NR system, or an access node in a base station or a wireless fidelity (WiFi) system in other mobile communication systems in the future. A detailed technology and a detailed device form used by the network device are not limited in embodiments of the disclosure. The network device in embodiments of the disclosure may be combined by a central unit (CU) and a distributed unit (DU), in which the CU may also be called a control unit. A protocol layer of the network device, such as the base station, may be separated by employing a CU-DU structure in which some functions of the protocol layer are centrally controlled by the CU, while some or all of remaining functions of the protocol layer are distributed in the DU. The DU is controlled by the CU.

The terminal 12 in embodiments of the disclosure is an entity on a user side that is configured to receive or transmit a signal, such as a mobile phone. The terminal may also be called a terminal, a user equipment (UE), a mobile station (MS), a mobile terminal (MT), etc. The terminal may be a car with a communication function, a smart car, a mobile phone, a wearable device, a Pad, a computer with a wireless sending and receiving function, a virtual reality (VR) terminal, an augmented reality (AR) terminal, a wireless terminal in an industrial control, a wireless terminal in self-driving, a wireless terminal in a remote medical surgery, a wireless terminal in a smart grid, a wireless terminal in a transportation safety, a wireless terminal in a smart city, a wireless terminal in a smart home and so on. A detailed technology and detailed device form used in the terminal are not limited in embodiments of the disclosure.

It is understood that the communication system in embodiments of the disclosure is intended to illustrate the technical solution in embodiments of the disclosure more clearly, does not constitute a limitation of the technical solution in embodiments of the disclosure. Those skilled in the art may know that the technical solution in embodiments of the disclosure is equally applicable to similar technical problems, with the evolution of a system architecture and the emergence of a new service scene.

It should be noted that, in the disclosure, a method for determining a CSI feedback in any embodiment may be implemented alone or in combination with a possible implementation in another embodiment, and may also be implemented in combination with any technical solution in the related art.

Further description is made to embodiments of the disclosure in combination with the accompanying drawings and detailed implementations.

Reference may now be made in detail to embodiments, examples of which are illustrated in the accompanying drawings. The following description refers to the accompanying drawings in which the same numbers in different drawings represent the same or similar elements unless otherwise represented. The implementations set forth in the description of following embodiments do not represent all implementations consistent with the disclosure. Instead, they are merely examples of apparatuses and methods consistent with aspects related to the disclosure as recited in the appended claims.

The terms used in the embodiments of the disclosure are intended to describe specific embodiments and are not intended to limit embodiments of the disclosure. The singular forms "a" and "the" used in embodiments of the disclosure and the appended claims are also intended to include majority forms unless the context clearly indicates other meanings. It should also be understood that the term "and/or" used herein refers to and include any or all possible combinations of one or more associated listed items.

Depending on the context, such as the words used here "if" and "in response to" can be interpreted as "when" or "in response to determining".

Description is made in detail below to embodiments of the disclosure, examples of the embodiments are illustrated in the accompanying drawings, where the same or similar numerals indicate the same or similar elements. The embodiments described below with reference to the accompanying drawings are illustrative and are intended to interpret the disclosure and should not be construed as a limitation of the disclosure.

When a coherent joint transmission (CJT) is performed by multiple TRPs, because the multiple TRPs may be in different positions, the network device and the terminal should be consistent with the understanding that whether a basis vector in a CSI feedback is for each TRP or for a TRP group. Otherwise, a performance of the coherent joint transmission based on the multiple TRPs may be affected. With a method for determining a CSI feedback according to the disclosure, it may be ensured that the terminal and the network device have a consistent understanding for a resource unit based on which the basis vector is selected in the CSI feedback, thus improving a transmission performance of the coherent joint transmission based on the multiple TRPs.

Please refer to FIG. 2, which is a flow chart illustrating a method for determining a CSI feedback according to an embodiment of the disclosure. The method is performed by a network device. As illustrated in FIG. 2, the method may include, but is not limited to, the following. At block 201, first indication information is sent to a terminal, in which the first indication information is used to indicate a resource unit based on which a basis vector is selected in the CSI feedback to the terminal. The basis vector includes at least one of a beam basis vector or a frequency domain basis vector. The resource unit includes at least one of: one CSI RS resource, multiple CSI RS resources, one port group of one CSI RS resource, or multiple port groups of one CSI RS resource.

Alternatively, the SD basis and the FD basis may be selected based on different resource units. That is, the network device may indicate a resource unit corresponding to the beam basis vector and a resource unit corresponding to the frequency domain basis vector, respectively. For example, the FD basis is selected based on one CSI RS resource, and the SD basis is selected based on multiple CSI RS resources, etc., which is not limited in the disclosure.

In the disclosure, after determining the resource unit based on which the basis vector is selected, it may be determined whether the basis vector selected is for a TRP or a TRP group based on a correspondence between the resource unit and the TRP.

For example, different TRPs correspond to different CSI RS resources. In case that the resource unit based on which the basis vector is selected includes one CSI RS resource, that is, the basis vector is selected for the TRP corresponding to the CSI RS resource. Or, in case that the resource unit based on which the basis vector is selected includes the multiple CSI RS resources, the basis vector is selected for multiple TRPs corresponding to the multiple CSI RS resources, that is, for the TRP group. Or, different TRPs correspond to different port groups of one CSI RS resource. In case that the resource unit based on which the basis vector is selected includes one port group of one CSI RS resource, the basis vector is selected for one TRP corresponding to the port group of the CSI RS resource. Or, in case that the resource unit based on which the basis vector is selected includes the multiple port groups of one CSI RS resource, the basis vector is selected for multiple TRPs corresponding to the multiple port groups of the CSI RS resource, that is, for the TRP group.

In the disclosure, the network device first determines the resource unit based on which the terminal selects the basis vector, and then indicates the resource unit to the terminal by the first indication information. Thus, the terminal may perform basis vector selection based on the number and/or type of the resource unit indicated in the first indication information.

Alternatively, in case that the first indication information includes at least one first CSI RS set, in which each first CSI RS set includes one CSI RS resource, the first indication information indicates to the terminal that the resource unit is one CSI RS resource included in each first CSI RS set, or, the first indication information may be used to indicate to the terminal the resource unit being all CSI RS resources included in the at least one first CSI RS set.

For example, the first indication includes a CSI RS set#1 and a CSI RS set#2, in which each of the CSI RS set#1 and the CSI RS set#2 includes one CSI RS resource. Then the terminal determines that the CSI RS resource in the CSI RS set#1 being a resource unit, and also determines that the CSI RS resource in the CSI RS set#2 being a resource unit. Then, the terminal performs basis vector selection with the CSI RS resource in the CSI RS set#1 as the resource unit, and performs basis vector selection with the CSI RS resource in the CSI RS set#2 as the resource unit. Alternatively, the terminal may also determine that both the CSI RS resource in the CSI RS set#1 and the CSI RS resource in the CSI RS set#2 are the resource unit. Then the terminal performs basis vector selection with the two CSI RS resources as the resource unit.

Alternatively, in case that the first indication information includes at least one second CSI RS set and each second CSI RS set includes one or more CSI RS resources, the first indication information is used to indicate to the terminal the resource unit being the one or more CSI RS resources included in each second CSI RS set.

For example, the first indication information includes a CSI RS set#1 and a CSI RS set#2, in which the CSI RS set#1 includes a CSI RS resource #1 and a CSI RS resource #2, and the CSI RS set#2 includes a CSI RS resource #3. Then the terminal determines the CSI RS resource #1 and the CSI RS resource #2 in the CSI RS set#1 as a resource unit, and the CSI RS resource #3 in the CSI RS set#2 as a resource unit. Then the terminal performs basis vector selection with both the CSI RS resource #1 and the CSI RS resource #2 as the resource unit, and performs basis vector selection with the CSI RS resource #3 as the resource unit.

Alternatively, the first indication information may also include one third CSI RS set, in which the third CSI RS set includes multiple CSI RS resources. In this case, the first indication information may be used to indicate to the terminal the resource unit being one of the multiple CSI RS resources in the third CSI RS set. Alternatively, the first indication information may also be used to indicate to the terminal the resource unit being the multiple CSI RS resources.

For example, the first indication information includes a CSI RS set#3, in which the CSI RS set#3 includes multiple CSI RS resources, such as a CSI RS resource #1 and a CSI RS resource #2. Then the terminal may determine each CSI RS resource in the CSI RS set#3 as a resource unit, that is, determine the CSI RS resource #1 as a resource unit and the CSI RS resource #2 as a resource unit. Then the terminal performs basis vector selection with the CSI RS resource #1 as the resource unit, and performs basis vector selection with the CSI RS resource #2 as the resource unit. Alternatively, the terminal may also determine the multiple CSI RS resources in the CSI RS set#3 as a resource unit, that is, determine the CSI RS resource #1 and the CSI RS resource #2 as a resource unit, then the terminal performs basis vector selection with the CSI RS resource #1 and the CSI RS resource #2 as the resource unit.

Alternatively, the first indication information may also include one CSI RS resource, and the CSI RS resource includes N first port groups, where N is a positive integer. In this case, the first indication information may be used to indicate to the terminal the resource unit being each first port group of the CSI RS resource. Alternatively, the first indication information may also be used to indicate to the terminal the resource unit being all the first port groups of the CSI RS resource.

For example, the first indication information includes one CSI RS resource, such as, a CSI RS #3, in which the CSI RS #3 includes 32 ports, with 4 port groups in total. Then the terminal may determine each port group in the CSI RS #3 as a resource unit, that is, the terminal may perform basis vector selection with each port group as the resource unit. Alternatively, the terminal may also determine that the four port groups in the CSI RS #3 as a resource unit, that is, perform basis vector selection with the four port groups as the resource unit.

Alternatively, a number of ports and port identifications corresponding to each port group may be sent by the network device to the terminal, or may also be determined by the terminal based on an agreement, which is not limited in the disclosure.

For example, a mapping relationship between the number of ports and the port identifications corresponding to each port group may include any one of the following.

Mapping relationship 1: each port group corresponds to the same number of ports, and the ports are consecutive. For example, one CSI RS resource corresponds to 32 ports with port identifications from #0 to #31. In case that the 32 ports are divided into 4 port groups, the mapping relationship 1 is that: ports #0 to #7 are determined as a first port group, ports #8 to #15 are determined as a second port group, ports #16 to #23 are determined as a third port group, and ports #24 to #31 are determined as a fourth port group. Or, in case that the 32 ports are divided into 2 port groups, the mapping relationship 1 is that: ports #0 to #15 are determined as a first port group, and ports #16 to #31 are determined as a second port group.

Mapping relationship 2: each port group corresponds to the same number of ports, but each two ports are not consecutive. For example, one CSI RS resource corresponds to 32 ports with port identifications from #0 to #31. In case that the 32 ports are divided into 4 port groups, a port identification corresponding to an i^{th} port is 4N+i-1, a value of i is 1, 2, 3 or 4, and N is an integer from 0 to 7. That is, the mapping relationship 2 is that: ports #0, #4, #8, #12, #16, #20, #24 and #28 are determined as a first port group, ports #1, #5, #9, #13, #17, #21, #25, #29 are determined as a second port group, ports #2, #6, #10, #14, #18, #22, #26, #30 are determined as a third port group, and ports #3, #7, #11, #15, #19, #23, #27, #31 are determined as a fourth port group. Or, in case that the 32 ports are divided into 2 port groups, the port identification corresponding to the i^{th} port is 2N+i-1, a value of i is 1 or 2, and N is an integer from 0 to 15. That is, the mapping relationship 2 is that: ports with port identifications of even numbers are determined as a first port group, and ports with port identifications of odd numbers are determined as a second port group.

Mapping relationship 3: each port group corresponds to the same number of ports and each two ports are consecutive. For example, one CSI RS resource corresponds to 32 ports with port identifications from #0 to #31. In case that the 32 ports are divided into 4 port groups, 32 ports are grouped first, that is, each 8 consecutive ports are a group, the 8 ports in each group include 4 groups of 2 consecutive ports, and the 4 groups of 2 consecutive ports are distributed into different port groups. That is, the mapping relationship 3 is that: ports #0, #1, #8, #9, #16, #17, #24, #25 are determined as a first port group, ports #2, #3, #10, #11, #18, #19, #26, #27 are determined as a second port group, ports #4, #5, #12, #13, #20, #21, #28, #29 are determined as a third port group, and ports #6, #7, #14, #15, #22, #23, #30, #31 are determined as a fourth port group. Or, in case that the 32 ports are divided into 2 port groups, the 32 ports are grouped first, that is, each 4 consecutive ports are a group, the 4 ports in each group include 2 groups of 2 consecutive ports, and the 2 groups of 2 consecutive ports are distributed into different port groups. That is, the third mapping relationship 3 is that: ports #0, #1, #4, #5, #8, #9, #12, #13, #16, #17, #20, #21, #24, #25, #28, #29 are determined as a first port group, and remaining ports are determined as a second port group.

Mapping relationship 4: each port group corresponds to the same number of ports and each four ports are consecutive. For example, one CSI RS resource corresponds to 32 ports with port identifications from #0 to #31. In case that the 32 ports are divided into 4 port groups, 32 ports are grouped first, that is, each 16 consecutive ports are a group, the 16 ports in each group include 4 groups of 4 consecutive ports, and the 4 groups of 4 consecutive ports are distributed into different port groups. That is, the mapping relationship 4 is that: ports #0, #1, #2, #3, #16, #17, #18, #19 are determined as a first port group, ports #4, #5, #6, #7, #20, #21, #22, #23 are determined as a second port group, ports #8, #9, #10, #11, #24, #25, #26, #27 are determined as a third port group, and ports #12, #13, #14, #15, #28, #29, #30, #31 are determined as a fourth port group. Or, in case that the 32 ports are divided into two port groups, 32 ports are grouped first, that each 8 consecutive ports are a group, the 8 ports in each group include 2 groups of 4 consecutive ports, and the 2 groups of 4 consecutive ports are distributed into different port groups. That is, the mapping relationship 4 is that: ports #0, #1, #2, #3, #8, #9, #10, #11, #16, #17, #18, #19, #24, #25, #26, #27 are determined as a first port group, and remaining ports are determined as a second port group.

In the disclosure, the network device sends first indication information to the terminal, to indicate the resource unit based on which the basis vector is selected by the terminal. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 3, which is a flow chart illustrating a method for determining a CSI feedback according to another embodiment of the disclosure. The method is performed by a network device. As illustrated in FIG. 3, the method may include, but is not limited to, the following. At block 301, first indication information is sent to a terminal, in which the first indication information is used to indicate a resource unit based on which a basis vector is selected in a CSI feedback to the terminal. For a detailed implementation process about block 301, please refer to a detailed description of any embodiment of the disclosure, which will not be repeated here. At block 302, in response to the first indication information including multiple first CSI RS sets, second indication information is sent to the terminal, in which the second indication information is used to indicate to the terminal that at least two first CSI RS sets are a group or to indicate a group identification corresponding to at least two first CSI RS sets. Each first CSI RS set includes one CSI RS resource.

In the disclosure, in case that the network device indicates the multiple first CSI RS sets to the terminal by the first indication information, and the resource unit based on which the terminal selects the basis vector may be multiple first CSI RS sets, the second indication information may be sent to the terminal to indicate which first CSI RS sets are a group or to indicate a group identification corresponding to which first CSI RS sets. That is, the terminal determines multiple CSI RS resources in the multiple first CSI RS sets in the group as the resource unit, such that the terminal performs basis vector selection based on the multiple CSI RS resources in the multiple first CSI RS sets in the group. In addition, for a first CSI RS set that is not indicated in the second indication information, each first CSI RS set may be a resource unit; or all first CSI RS sets that are not indicated in the second indication information may be a group, that is, determined as a resource unit, which is not limited in the disclosure.

For example, the first indication information includes a CSI RS set #1, a CSI RS set #2 and a CSI RS set #3, in which each of the CSI RS set #1, the CSI RS set #2 and the CSI RS set#3 includes one CSI RS resource. The second indication information indicates that the CSI RS set#2 and the CSI RS set#3 are a group or indicates a group identification corresponding to the CSI RS set#2 and the CSI RS set#3, thus the terminal may determine the 2 CSI RS resources included in the CSI RS set#2 and the CSI RS set#3 as a resource unit, and determine the CSI RS resource in the CSI RS set#1 as a resource unit. Then the terminal performs basis vector selection with the 2 CSI RS resources included in the CSI RS set#2 and the CSI RS set# 3 as the resource unit, and performs basis vector selection with the CSI RS resource in the CSI RS set#1 as the resource unit.

In the disclosure, the network device indicates the multiple first CSI RS sets to the terminal by the first indication information, and indicates the resource sets being one group or indicates the group identification corresponding to the resource sets by the second indication information, such that the terminal determines the CSI RS resources included in the resource sets in the group as the resource unit. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 3a, which is a flow chart illustrating a method for determining a CSI feedback according to another embodiment of the disclosure. The method is performed by a network device. As illustrated in FIG. 3a, the method may include, but is not limited to, the following. At block 303, first indication information is sent to a terminal, the first indication information includes at least one second CSI RS set, each second CSI RS set includes one or more CSI RS resources, and the first indication information is used to indicate to the terminal the resource unit being the one or more CSI RS resources included in each second CSI RS set.

For example, the first indication information includes a CSI RS set#1 and a CSI RS set#2, in which the CSI RS set#1 includes a CSI RS resource #1 and a CSI RS resource #2, and the CSI RS set#2 includes a CSI RS resource #3. Then the terminal may determine the CSI RS resource #1 and the CSI RS resource #2 in the CSI RS set#1 as a resource unit, and the CSI RS resource #3 in the CSI RS set#2 as a resource unit. Then the terminal performs basis vector selection with the CSI RS resource #1 and the CSI RS resource #2 as the resource unit, and performs basis vector selection with the CSI RS resource #3 as the resource unit.

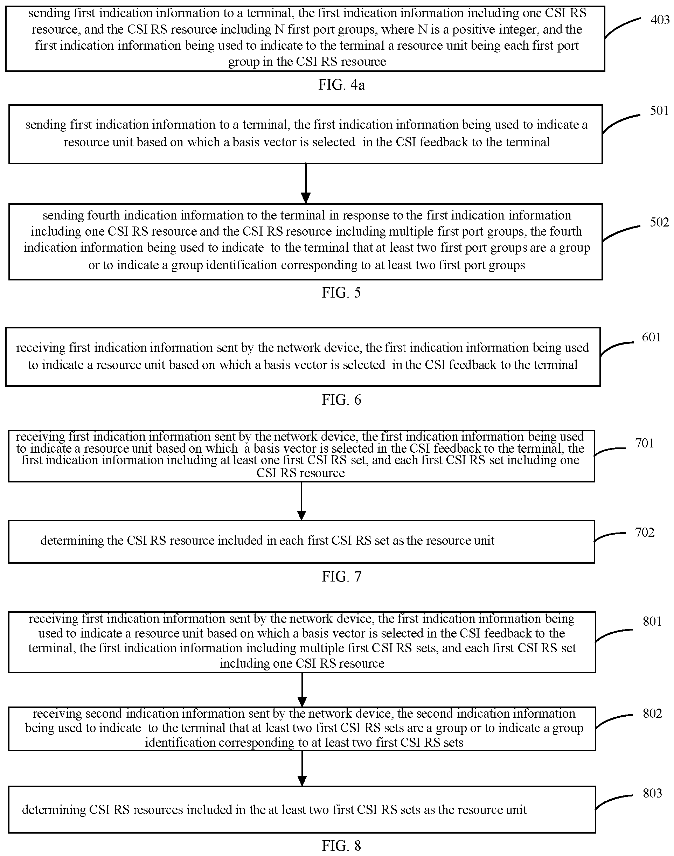

In the disclosure, the network device indicates the at least one second CSI RS set including the one or more CSI RS resources to the terminal by the first indication information, such that the terminal determines the one or more CSI RS resource in each second CSI RS set as the resource unit. Thus, it is ensured that the understanding of the terminal is consistent with the understanding of the network device for the resource unit based on which the basis vector is selected in the CSI feedback, thus improving the transmission performance of the coherent joint transmission based on the multiple TRPs. FIG. 4 is a flow chart illustrating a method for determining a CSI feedback according to another embodiment of the disclosure. The method is performed by a network device. As illustrated in FIG. 4, the method may include, but is not limited to, the following. At block 401, first indication information is sent to a terminal, in which the first indication information indicates a resource unit based on which a basis vector is selected in the CSI feedback to the terminal. For a detailed implementation process about the block 401, please refer to a detailed description of any embodiment of the disclosure, which will not be repeated here. At step 402, in response to the first indication information including one third CSI RS set, and the third CSI RS set including multiple CSI RS resources, third indication information is sent to the terminal. The third indication information is used to indicate to the terminal that at least two CSI RS resources in the third CSI RS set are a group or to indicate a group identification corresponding to at least two CSI RS resources in the third CSI RS set.

In the disclosure, in case that the network device indicates the third CSI RS set including the multiple CSI RS resources by the first indication information to the terminal, and the resource unit based on which the terminal selects the basis vector may be one or more CSI RS resources in the third CSI RS set, the third indication information is sent to the terminal to indicate which CSI RS resources are a group or indicate a group identification corresponds to which CSI RS resources, such that the terminal determines the CSI RS resources as a resource unit. In addition, for a CSI RS resource in the third CSI RS set that is not indicated in the third indication information, each CSI RS resource may be a resource unit; or all CSI RS resources that are not indicated in the third indication information may be a group, that is, determined as a resource unit, which is not limited in the disclosure.

For example, the first indication information includes a CSI RS set#3, in which CSI RS resources included in the CSI RS set#3 are: a CSI RS #1, a CSI RS #2, a CSI RS #3, and a CSI RS #4. The third indication information indicates that the CSI RS #2 and the CSI RS #3 are a group or indicates a group identification corresponding to the CSI RS #2 and the CSI RS #3. Then the terminal may determine the CSI RS# 2 and the CSI RS#3 as a resource unit, and the terminal performs basis vector selection with the CSI RS# 2 and the CSI RS#3 as the resource unit. In addition, each of the CSI RS #1 and the CSI RS #4 is determined as a resource unit, then the terminal performs basis vector selection with the CSI RS #1 as the resource unit, and the terminal performs basis vector selection with the CSI RS #4 as the resource unit. Or, the CSI RS #1 and the CSI RS #4 may be determined as a resource unit, then the terminal performs basis vector selection with the CSI RS# 1 and the CSI RS#4 as the resource unit.

In the disclosure, the network device first indicates one resource set including the multiple CSI RS resources by the first indication information to the terminal, and then indicates the CSI RS resources being the group or indicates the group identification corresponding to the CSI RS resources to the terminal by the third indication information, such that the terminal determines the CSI RS resources in the group as a resource unit. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 4a, which is a flow chart illustrating a method for determining a CSI feedback according to another embodiment of the disclosure. This method is performed by a network device. As illustrated in FIG. 4a, the method may include, but is not limited to, the following. At block 403, first indication information is sent to a terminal, in which the first indication information includes one CSI RS resource, and the CSI RS resource includes N first port groups, where N is a positive integer. The first indication information is used to indicate to the terminal a resource unit being each first port group in the CSI RS resource.

In the disclosure, in case that the network device indicates one CSI RS resource including multiple port groups by the first indication information to the terminal, the terminal may determine each first port group of the CSI RS resource as a resource unit.

For example, the first indication information includes one CSI RS resource, such as a CSI RS#3, in which the CSI RS#3 includes 32 ports, with 4 port groups in total. Then the terminal may determine each port group in the CSI RS #3 as a resource unit, that is, the terminal may performs basis vector selection with each port group as a resource unit.

In the disclosure, the network device first indicates one CSI RS resource including the N port groups by the first indication information to the terminal, such that the terminal may determine each port group as a resource unit. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 5, which is a flow chart illustrating a method for determining a CSI feedback according to another embodiment of the disclosure. The method is performed by a network device. As illustrated in FIG. 5, the method may include, but is not limited to, the following. At block 501, first indication information is sent to a terminal, in which the first indication information is used to indicate a resource unit based on which a basis vector is selected in the CSI feedback to the terminal. At block 502, in response to the first indication information including a CSI RS resource and the CSI RS resource including multiple first port groups, fourth indication information is sent to the terminal. The fourth indication information is used to indicate to the terminal that at least two first port groups are a group or to indicate a group identification corresponding to at least two first port groups.

In the disclosure, in case that the network device indicates one CSI RS resource including multiple port groups by the first indication information to the terminal, and the resource unit based on which the terminal selects the basis vector is not all the port groups of the CSI RS resource, or not each port group may be independently determined as a resource unit, the fourth indication information may be sent to the terminal to indicate which port groups are a group or a group identification corresponding to which port groups, such that the terminal may determine the port groups as a resource unit. In addition, each port group of the CSI RS resource that is not indicated in the fourth indication information may be a resource unit; or all port groups that are not indicated in the fourth indication information are a group, that is, determined as a resource unit, which is not limited in the disclosure.

For example, the first indication information includes 4 port groups corresponding to a CSI RS resource #1: a port group #1, a port group #2, a port group #3, and a port group #4. The fourth indication information indicates the port group #2 and the port group #3 as a group, or indicates a group identification corresponding to the port group #2 and the port group #3, such that the terminal may determine the port group #2 and the port group #3 of the CSI RS resource #1 as a resource unit. Then the terminal may perform basis vector selection with the port group #2 and the port group #3 of the CSI RS resource #1 as the resource unit. In addition, each of the port group #1 and the port group #4 in the CSI RS resource #1 may be determined as a resource unit, and then the terminal performs basis vector selection with the port group #1 of the CSI RS resource #1 as the resource unit, and performs basis vector selection with the port group #4 of the CSI RS resource #1 as the resource unit; or both the port group #1 and the port group #4 are determined as a resource unit, and the terminal performs basis vector selection with the port group #1 and the port group #4 of the CSI RS resource #1 as the resource unit.

Alternatively, the network device may also send fifth indication information to the terminal, in which the fifth indication information is used to indicate a mapping relationship between each first port group and at least one port identification to the terminal.

For example, the mapping relationship between each port group and the port identification may be one of the following.

Mapping relationship 1: Each port group corresponds to the same number of ports and the ports are consecutive. For example, one CSI RS resource corresponds to 32 ports with port identifications from #0 to #31. In case that the 32 ports are divided into 4 port groups, the mapping relationship 1 is that: ports #0 to #7 are determined as a first port group, ports #8 to #15 are determined as a second port group, ports #16 to #23 are determined as a third port group, and ports #24 to #31 are determined as a fourth port group. Or, in case that the ports are divided into 2 port groups, the mapping relationship 1 is that: ports #0 to #15 are determined as a first port group, and ports #16 to #31 are determined as a second port group.

Mapping relationship 2: each port group corresponds to the same number of ports and every two ports are not consecutive. For example, one CSI RS resource corresponds to 32 ports with port identifications from #0 to #31. In case that the 32 ports are divided into 4 port groups, a port identification corresponding to an i^{th} port is 4N+i-1, a value of i is 1, 2, 3 or 4, and N is an integer from 0 to 7. That is, the mapping relationship 2 is that: ports #0, #4, #8, #12, #16, #20, #24 and #28 are determined as a first port group, ports #1, #5, #9, #13, #17, #21, #25, #29 are determined as a second port group, ports #2, #6, #10, #14, #18, #22, #26, #30 are determined as a third port group, and ports #3, #7, #11, #15, #19, #23, #27, #31 are determined as a fourth port group. Or, in case that the 32 ports are divided into 2 port groups, the port identification corresponding to the i^{th} port is 2N+i-1, a value of i is 1 or 2, and N is an integer from 0 to 15. That is, the mapping relationship 2 is that: ports with port identifications of even numbers are determined as a first port group, and ports with port identifications of odd numbers are determined as a second port group.

Mapping relationship 3: each port group corresponds to the same number of ports and every two ports are consecutive. For example, one CSI RS resource corresponds to 32 ports with port identifications from #0 to #31. In case that the 32 ports are divided into 4 port groups, 32 ports are grouped first, that is, each 8 consecutive ports are a group, the 8 ports in each group include 4 groups of 2 consecutive ports, and the 4 groups of 2 consecutive ports are distributed into different port groups. That is, the mapping relationship 3 is that: ports #0, #1, #8, #9, #16, #17, #24, #25 are determined as a first port group, ports #2, #3, #10, #11, #18, #19, #26, #27 are determined as a second port group, ports #4, #5, #12, #13, #20, #21, #28, #29 are determined as a third port group, ports #6, #7, #14, #15, #22, #23, #30, #31 are determined as a fourth port group. Or, in case that the 32 ports are divided into 2 port groups, 32 ports are grouped first, that is, each 4 consecutive ports is a group, the 4 ports in each group include 2 groups of 2 consecutive ports, and the 2 groups of 2 consecutive ports are distributed into different port groups. That is, ports #0, #1, #4, #5, #8, #9, #12, #13, #16, #17, #20, #21, #24, #25, #28, #29 are determined as a first port group, and other ports are determined as a second port group.

Mapping relationship 4: each port group corresponds to the same number of ports and each four ports are consecutive. For example, one CSI RS resource corresponds to 32 ports with port identifications from #0 to #31. In case that the 32 ports are divided into 4 port groups, 32 ports are grouped first, that is, each 16 consecutive ports is a group, the 16 ports in each group include 4 groups of 4 consecutive ports, and the 4 groups of the 4 consecutive ports are distributed into different port groups. That is, the mapping relationship 4 is that: ports #0, #1, #2, #3, #16, #17, #18, #19 are determined as a first port group, ports #4, #5, #6, #7, #20, #21, #22, #23 are determined as a second port group, ports #8, #9, #10, #11, #24, #25, #26, #27 are determined as a third port group, and ports #12, #13, #14, #15, #28, #29, #30, #31 are determined as a fourth port group. Or, in case that the 32 ports are divided into two port groups, 32 ports are grouped first, that is, each 8 consecutive ports is a group, the 8 ports in each group include 2 groups of 4 consecutive ports, and the 2 groups of 4 consecutive ports are distributed into different port groups. That is, the mapping relationship 4 is that: ports #0, #1, #2, #3, #8, #9, #10, #11, #16, #17, #18, #19, #24, #25, #26, #27 are determined as a first port group, and remaining ports are determined as second port groups.

Alternatively, the mapping relationship between each port group and the port identification may not be indicated by the network device, but be determined by the terminal based on a default mapping relationship. The default mapping relationship includes any one of the above mapping relationships 1,2,3,4. For example, the default mapping relationship is the mapping relationship 1, that is, each port group includes the same number of consecutive ports, and one CSI RS resource corresponds to the 32 ports with the port identifications from #0 to #31. In case that the 34 ports are divided into 4 port groups, the port identifications from #0 to #7 may be determined as one port group, and the port identifications from #8 to #15 may be determined as one port group, the port identifications from #16 to #23 may be determined as one port group, and the port identifications from #24 to #31 may be determined as one port group, which is not limited in the disclosure.

In the disclosure, the network device first indicates one CSI RS resource including the multiple port groups by the first indication information to the terminal, and then indicates which port groups are a group or indicates a group identification corresponding to which port groups to the terminal by the fourth indication information, such that the terminal may determine the group of port groups as a resource unit. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 6, which is a flow chart illustrating a method for determining a CSI feedback according to a still yet another embodiment of the disclosure. The method is performed by a terminal. As illustrated in FIG. 6, the method may include but is not limited to, the following. At block 601, first indication information sent by the network device is received, in which the first indication information is used to indicate a resource unit based on which a basis vector is selected in the CSI feedback to the terminal, , in which the basis vector includes at least one of a beam basis vector or a frequency domain basis vector. The resource unit includes at least one of: one CSI RS resource, multiple CSI RS resources, one port group of one CSI RS resource, or multiple port groups of one CSI RS resource.

Alternatively, an SD basis and an FD basis may be selected based on different resource units. That is, the network device may indicate a resource unit corresponding to a beam basis vector and a resource unit corresponding to the frequency domain basis vector, respectively. For example, the FD basis is selected based on one CSI RS resource, and the SD basis is selected based on the multiple CSI RS resources, etc., which is not limited in the disclosure.

In the disclosure, after determining the resource unit based on which the basis vector is selected, it may be determined whether the basis vector selected is for a TRP or a TRP group based on a correspondence between the resource unit and the TRP.

For example, different TRPs correspond to different CSI RS resources. In case that the resource unit based on which the basis vector is selected is one CSI RS resource, that is, the basis vector is selected for a TRP corresponding to the CSI RS resource. Or, in case that the resource unit based on which the basis vector is selected is the multiple CSI RS resources, the basis vector is selected for multiple TRPs corresponding to the multiple CSI RS resources, that is, for the TRP group. Alternatively, different TRPs may correspond to different port groups of one CSI RS resource. In case that the resource unit based on which the basis vector is selected includes one port group of one CSI RS resource, the basis vector is selected for one TRP corresponding to the port group of the CSI RS resource. Or, in case that the resource unit based on which the basis vector is selected includes the multiple port groups of one CSI RS resource, the basis vector is selected for multiple TRPs corresponding to the multiple port groups of the CSI RS resource, that is, for the TRP group.

In the disclosure, the network device first determines the resource unit based on which the terminal selects the basis vector, and then indicates the resource unit to the terminal by the first indication information. Thus, the terminal may perform basis vector selection based on the number and/or type of the resource unit indicated in the first indication information.

In the disclosure, the terminal may determine the resource unit based on which the basis vector is selected based on the first indication information after receiving the first indication information sent by the network device. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 7, which is a flow chart illustrating a method for determining a CSI feedback according to a still yet another embodiment of the disclosure. The method is performed by a terminal. As illustrated in FIG. 7, the method may include, but is not limited to, the following. At block 701, first indication information sent by the network device is received, in which the first indication information is used to indicate a resource unit based on which a basis vector is selected in the CSI feedback to the terminal. The first indication information includes at least one first CSI RS set, in which each first CSI RS set includes one CSI RS resource. At block 702, the CSI RS resource included in each first CSI RS set is respectively determined as the resource unit.

Alternatively, the terminal may also determine all CSI RS resources included in the at least one first CSI RS sets indicated by the first indication information as the resource unit.

For example, the first indication information includes a CSI RS set#1 and a CSI RS set#2, in which each of the CSI RS set#1 and the CSI RS set#2 include one CSI RS. Then the terminal determines the CSI RS resource in the CSI RS set#1 as a resource unit, and also determines the CSI RS resource in the CSI RS set#2 a resource unit. Then, the terminal performs basis vector selection with the CSI RS resource in the CSI RS set#1 as the resource unit, and performs basis vector selection with the CSI RS resource in the CSI RS set#2 as the resource unit. Alternatively, the terminal may determine that both the CSI RS resource in the CSI RS set#1 and the CSI RS resource in the CSI RS set#2 are a resource unit. Then the terminal performs basis vector selection with the two CSI RS resources as the resource unit.

In the disclosure, the terminal may determine the CSI RS included in each first CSI RS set as the resource unit based on which the basis vector is selected after receiving the at least one first CSI RS set sent by the network device. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 8, which is a flow chart illustrating a method for determining a CSI feedback according to a still yet another embodiment of the disclosure. The method is performed by a terminal. As illustrated in FIG. 8, the method may include, but is not limited to, the following. At block 801, first indication information sent by the network device is received, in which the first indication information is used to indicate a resource unit based on which a basis vector is selected in the CSI feedback to the terminal. The first indication information includes multiple first CSI RS set, in which each first CSI RS set includes a CSI RS resource. At block 802, second indication information sent by the network device is received, in which the second indication information indicates to the terminal that at least two first CSI RS sets are a group or indicates a group identification corresponding to at least two first CSI RS sets. At block 803, CSI RS resources included in the at least two first CSI RS sets are determined as the resource unit.

In the disclosure, in case that the network device indicates the multiple first CSI RS sets by the first indication information to the terminal, and the resource unit based on which the terminal selects the basis vector may be multiple first CSI RS sets, the second indication information may be sent to the terminal to indicate which first CSI RS sets are a group or indicate a group identification corresponding to which first CSI RS sets. Then the terminal performs basis vector selection with the at least two first CSI RS sets as the resource unit, such that the terminal performs basis vector selection based on the multiple CSI RS resources in the first CSI RS sets in the group. In addition, for a first CSI RS set that is not indicated in the second indication information, each first CSI RS set may be a resource unit; or all first CSI RS sets that are not indicated in the second indication information may be a group, that is, determined as a resource unit, which is not limited in the disclosure.

For example, the first indication information includes a CSI RS set #1, a CSI RS set #2 and a CSI RS set #3, in which each of the CSI RS set #1, the CSI RS set #2 and the CSI RS set#3 includes one CSI RS. The second indication information indicates that the CSI RS set#2 and the CSI RS set#3 are a group or indicates a group identification corresponding to the CSI RS set#2 and the CSI RS set#3. Then the terminal may determine the 2 CSI RS resources included in the CSI RS set#2 and the CSI RS set#3 as a resource unit, and determine the CSI RS resource in the CSI RS set#1 as a resource unit. Then the terminal performs basis vector selection with the 2 CSI RS resources included in the CSI RS set#2 and the CSI RS set# 3 as the resource unit, and performs basis vector selection with the CSI RS resource in the CSI RS set#1 as the resource unit.

In the disclosure, the terminal receives the multiple first CSI RS resource sets indicated by the network device via the first indication information, and then receives the resource sets being a group indicated by the network device or the group identification corresponding to the resource sets indicated by the network device via the second indication information, such that the terminal determines the CSI RS resources included in the resource sets in the group as a resource unit. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

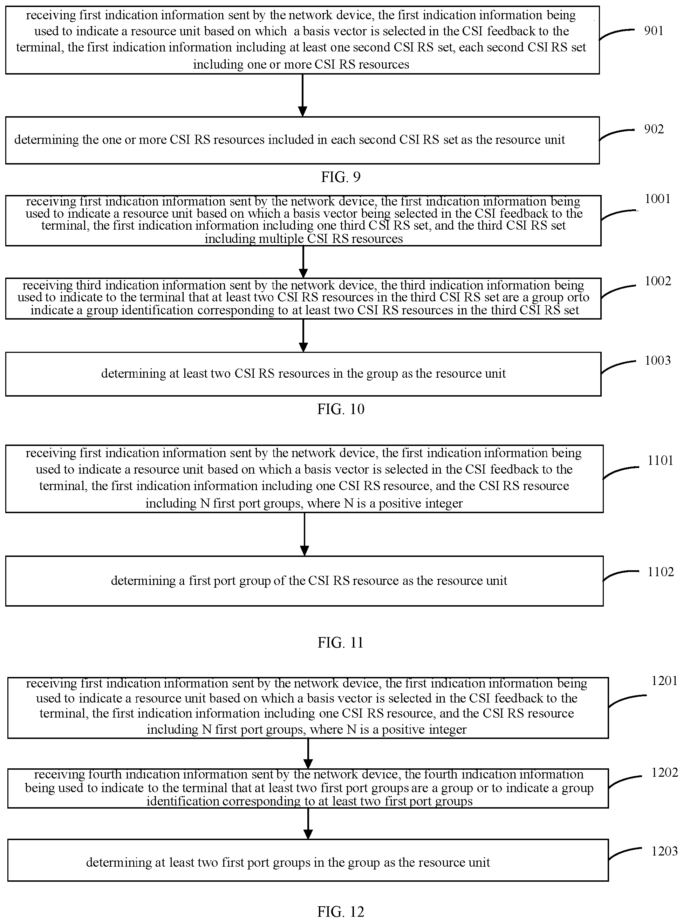

Please refer to FIG. 9, which is a flow chart illustrating a method for determining a CSI feedback according to another embodiment of the disclosure. The method is performed by a terminal. As illustrated in FIG. 9, the method may include, but is not limited to, the following. At block 901, first indication information sent by the network device is received, in which the first indication information is used to indicate a resource unit based on which a basis vector is selected in the CSI feedback to the terminal. The first indication information includes at least one second CSI RS set, in which each second CSI RS set includes one or more CSI RS resources. At block 902, the one or more CSI RS resources included in each second CSI RS set are determined as the resource unit.

For example, the first indication information includes a CSI RS set#1 and a CSI RS set#2, in which the CSI RS set#1 includes a CSI RS resource #1 and a CSI RS resource #2, and the CSI RS set#2 includes a CSI RS resource #3. Then the terminal may determine the CSI RS resource #1 and the CSI RS resource #2 in the CSI RS set#1 as a resource unit, and determine the CSI RS resource #3 in the CSI RS set#2 as a resource unit. Then the terminal performs basis vector selection with both the CSI RS resource #1 and the CSI RS resource #2 as the resource unit, and performs basis vector selection with the CSI RS resource #3 as the resource unit.

In the disclosure, the terminal may determine the one or more CSI resources included in each second CSI set as the resource unit after receiving the at least one second CSI RS resource set indicated by the network device via the first indication information. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 10, which is a flow chart illustrating a method for determining a CSI feedback according to another embodiment of the disclosure. The method is performed by a terminal. As illustrated in FIG. 10, the method can include, but is not limited to, the following. At block 1001, first indication information sent by the network device is received, in which the first indication information is used to indicate a resource unit based on which a basis vector is selected in the CSI feedback to the terminal. The first indication information includes one third CSI RS set, and the third CSI RS set includes multiple CSI RS resources. In this way, the terminal may determine the resource unit being one or more CSI RS resources in the multiple CSI RS resources in the third CSI RS set. For example, the first indication information includes a CSI RS set#3, in which the CSI RS set#3 includes multiple CSI RS resources. Then the terminal may determine each CSI RS resource in the CSI RS set#3 as a resource unit. Or, the terminal may determine the multiple CSI RS resources in the CSI RS set#3 as a resource unit. At block 1002, third indication information sent by the network device is received, in which the third indication information is used to indicate to the terminal that at least two CSI RS resources in the third CSI RS set are a group or indicates a group identification corresponding to at least two CSI RS resources in the third CSI RS set. At block 1003, the at least two CSI RS resources in the group are determined as the resource unit.

In the disclosure, in case that the network device indicates one third CSI RS set including the multiple CSI RS resources to the terminal by the first indication information and the resource unit based on which the terminal selects the basis vector is not all the CSI RS resources in the third CSI RS set, the third indication information may be sent to the terminal to indicate which CSI RS resources are a group or indicate a group identification corresponding to which CSI RS resources, such that the terminal may determine the CSI RS resources as a resource unit. In addition, for a CSI RS resource in the third CSI RS set that is not indicated in the third indication information, each CSI RS resource may be a resource unit; or all CSI RS resources that are not indicated in the third indication information are a group, that is, determined as a resource unit, which is not limited in the disclosure.

For example, the first indication information includes a CSI RS set#3, in which CSI RS resources included in the CSI RS set#3 are: a CSI RS #1, a CSI RS #2, a CSI RS #3, and a CSI RS #4. The third indication information indicates that the CSI RS #2 and the CSI RS #3 are a group or indicates a group identification corresponding to the CSI RS #2 and the CSI RS #3. Then the terminal may determine the CSI RS# 2 and the CSI RS#3 as a resource unit. Then the terminal performs basis vector selection with the CSI RS# 2 and the CSI RS#3 as the resource unit. In addition, each of the CSI RS #1 and the CSI RS #4 is determined as a resource unit, then the terminal performs basis vector selection with the CSI RS #1 as the resource unit, and performs basis vector selection with the CSI RS #4 as the resource unit. Or, both the CSI RS #1 and the CSI RS #4 may be determined as a resource unit, then the terminal performs basis vector selection with both the CSI RS# 1 and the CSI RS#4 as the resource unit.

Alternatively, in case that the terminal does not receive the third indication information, one of the multiple CSI RS resources included in the third CSI RS set may be determined as the resource unit.

In the disclosure, the terminal first receives the third CSI RS set including the multiple CSI RS resources indicated by the network device via the first indication information, and then which CSI RS resources are a group or a group identification corresponding to which CSI RS resources are indicated to the terminal by the third indication information. Then the terminal may determine the CSI RS resources in the group as a resource unit. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 11, which is a flow chart illustrating a method for determining a CSI feedback according to another embodiment of the disclosure. The method is performed by a terminal. As illustrated in FIG. 11, the method may include, but is not limited to, the following. At block 1101, first indication information sent by the network device is received, in which the first indication information indicates a resource unit based in which a basis vector is selected in the CSI feedback to the terminal. The first indication information includes a CSI RS resource, and the CSI RS resource includes N first port groups, where N is a positive integer. At block 1102, a first port group of the CSI RS resource is determined as the resource unit.

In the disclosure, in case that the network device indicates one CSI RS resource including multiple port groups to the terminal by the first indication information, the terminal may determine one first port group of the CSI RS resource as the resource unit.

For example, the first indication information includes a CSI RS#3, in which the CSI RS#3 includes 32 ports, with 4 port groups in total. Then the terminal may determine each port group in the CSI RS #3 as a resource unit, that is, the terminal may perform basis vector selection with each port group as the resource unit.

Alternatively, the terminal may also receive fifth indication information sent by the network device, in which the fifth indication information is used to indicate a mapping relationship between each first port group and at least one port identification to the terminal.

For example, the mapping relationship between each port group and the port identification may be one of the following.

Mapping relationship 1: each port group corresponds to the same number of ports and the ports are consecutive. For example, one CSI RS resource corresponds to 32 ports with port identifications from #0 to #31. In case that the 32 ports are divided into 4 port groups, the mapping relationship 1 is that: ports #0 to #7 are determined as a first port group, ports #8 to #15 are determined as a second port group, ports #16 to #23 are determined as a third port group, and ports #24 to #31 are determined as a fourth port group. Or, in case that the 32 ports are divided into 2 port groups, the mapping relationship 1 is that: ports #0 to #15 are determined as a first port group, and ports #16 to #31 are determined as a second port group.

Mapping relationship 2: each port group corresponds to the same number of ports and each two ports are not consecutive. For example, one CSI RS resource corresponds to 32 ports with port identifications from #0 to #31. In case that the 32 ports are divided into 4 port groups, a port identification corresponding to an i^{th} port is 4N+i-1, a value of i is 1, 2, 3 or 4, and N is an integer from 0 to 7. That is, the mapping relationship 2 is that: ports #0, #4, #8, #12, #16, #20, #24 and #28 are determined as a first port group, ports #1, #5, #9, #13, #17, #21, #25, #29 are determined as a second port group, ports #2, #6, #10, #14, #18, #22, #26, #30 are determined as a third port group, and ports #3, #7, #11, #15, #19, #23, #27, #31 are determined as a fourth port group. Or, in case that the 32 ports are divided into 2 port groups, the port identification corresponding to the i^{th} port is 2N+i-1, a value of i is 1 or 2, and N is an integer from 0 to 15. That is, the mapping relationship 2 is that: ports with port identifications of even numbers are determined as a first port group, and ports with port identifications of odd numbers are determined as a second port group.

Mapping relationship 3: each port group corresponds to the same number of ports and each two ports are consecutive. For example, one CSI RS resource corresponds to 32 ports with port identifications from #0 to #31. In case that the 32 ports are divided into 4 port groups, 32 ports are grouped first, that is, each 8 consecutive ports are a group, the 8 ports in each group include 4 groups of 2 consecutive ports, and the 4 groups of 2 consecutive ports are distributed into different port groups. That is, the mapping relationship 3 is that: ports #0, #1, #8, #9, #16, #17, #24, #25 are determined as a first port group, ports #2, #3, #10, #11, #18, #19, #26, #27 are determined as a second port group, ports #4, #5, #12, #13, #20, #21, #28, #29 are determined as a third port group, and ports #6, #7, #14, #15, #22, #23, #30, #31 are determined as a fourth port group. Or, in case that the 32 ports are divided into 2 port groups, the 32 ports are grouped first, that is, each 4 consecutive ports are a group, the 4 ports in each group include 2 groups of 2 consecutive ports, and the 2 groups of 2 consecutive ports are distributed into different port groups. That is, the third mapping relationship 3 is that: ports #0, #1, #4, #5, #8, #9, #12, #13, #16, #17, #20, #21, #24, #25, #28, #29 are determined as a first port group, and remaining ports are determined as a second port group.

Mapping relationship 4: each port group corresponds to the same number of ports and each four ports are consecutive. For example, one CSI RS resource corresponds to 32 ports with port identifications from #0 to #31. In case that the 32 ports are divided into 4 port groups, 32 ports are grouped first, that is, each 16 consecutive ports are a group, the 16 ports in each group include 4 groups of 4 consecutive ports, and the 4 groups of 4 consecutive ports are distributed into different port groups. That is, the mapping relationship 4 is that: ports #0, #1, #2, #3, #16, #17, #18, #19 are determined as a first port group, ports #4, #5, #6, #7, #20, #21, #22, #23 are determined as a second port group, ports #8, #9, #10, #11, #24, #25, #26, #27 are determined as a third port group, and ports #12, #13, #14, #15, #28, #29, #30, #31 are determined as a fourth port group. Or, in case that the 32 ports are divided into two port groups, 32 ports are grouped first, that each 8 consecutive ports are a group, the 8 ports in each group include 2 groups of 4 consecutive ports, and the 2 groups of 4 consecutive ports are distributed into different port groups. That is, the mapping relationship 4 is that: ports #0, #1, #2, #3, #8, #9, #10, #11, #16, #17, #18, #19, #24, #25, #26, #27 are determined as a first port group, and remaining ports are determined as a second port group.

Alternatively, the mapping relationship between each port group and the port identification may not be indicated by the network device, but be determined by the terminal based on a default mapping relationship. The default mapping relationship includes any one of the above mapping relationships 1,2,3,4. For example, the default mapping relationship is the mapping relationship 1, that is, each port group includes the same number of consecutive ports, and one CSI RS resource corresponds to the 32 ports with the port identifications from #0 to #31. In case that the 34 ports are divided into 4 port groups, the port identifications from #0 to #7 may be determined as one port group, and the port identifications from #8 to #15 may be determined as one port group, the port identifications from #16 to #23 may be determined as one port group, and the port identifications from #24 to #31 may be determined as one port group, which is not limited in the disclosure.

In the disclosure, the network device first indicates one CSI RS resource including the multiple port groups to the terminal by the first indication information, such that the terminal may determine one port group in the multiple port groups as a resource unit. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 12, which is a flow chart illustrating a method for determining a CSI feedback according to a still yet another embodiment of the disclosure. The method is performed by a terminal. As illustrated in FIG. 12, the method may include, but is not limited to, the following. At block 1201, first indication information sent by the network device is received, in which the first indication information is used to indicate a resource unit based on which a basis vector is selected in the CSI feedback to the terminal. The first indication information includes one CSI RS resource, and the CSI RS resource includes N first port groups, where N is a positive integer. At block 1202, fourth indication information sent by the network device is received, in which the fourth indication information indicates to the terminal that at least two first port groups are a group or indicates a group identification corresponding to at least two first port groups. At block 1203, the at least two first port groups in the group are determined as the resource unit.

In the disclosure, in case that the network device indicates one CSI RS resource including multiple port groups to the terminal by the first indication information, and the resource unit based on which the terminal selects the basis vector is not all the port groups of the CSI RS resource, or not each port group may be independently determined as a resource unit, the fourth indication information may be sent to the terminal to indicate which port groups are a group or a group identification corresponding to which port groups, such that the terminal may determine the port groups as a resource unit. In addition, each port group of the CSI RS resource that is not indicated in the fourth indication information may be a resource unit; or all port groups that are not indicated in the fourth indication information are a group, that is, determined as a resource unit, which is not limited in the disclosure.

For example, the first indication information includes 4 port groups corresponding to a CSI RS resource #1: a port group #1, a port group #2, a port group #3, and a port group #4. The fourth indication information indicates that the port group #2 and the port group #3 are a group or indicates a group identification corresponding to the port group #2 and the port group #3, such that the terminal may determine the port group #2 and the port group #3 of the CSI RS resource #1 as a resource unit. Then the terminal may perform basis vector selection with the port group #2 and the port group #3 of the CSI RS resource #1 as the resource unit. In addition, each of the port group #1 and the port group #4 in the CSI RS resource #1 may be determined as a resource unit, and then the terminal performs basis vector selection with the port group #1 of the CSI RS resource #1 as the resource unit, and performs basis vector selection with the port group #4 of the CSI RS resource #1 as the resource unit; or, both the port group #1 and the port group #4 are determined as a resource unit, and the terminal performs basis vector selection with the port group #1 and the port group #4 of the CSI RS resource #1 as the resource unit.

In the disclosure, the network device first indicates one CSI RS resource including multiple port groups to the terminal by the first indication information, and then indicates which port groups are a group or indicates a group identification corresponding to which port groups to the terminal by the fourth indication information, such that the terminal may determine the port groups in the group as a resource unit. Thus, it is ensured that the understanding of the terminal is consistent with the understanding of the network device for the resource unit based on which the basis vector is selected in the CSI feedback, thus improving the transmission performance of coherent joint transmission based on the multiple TRPs.

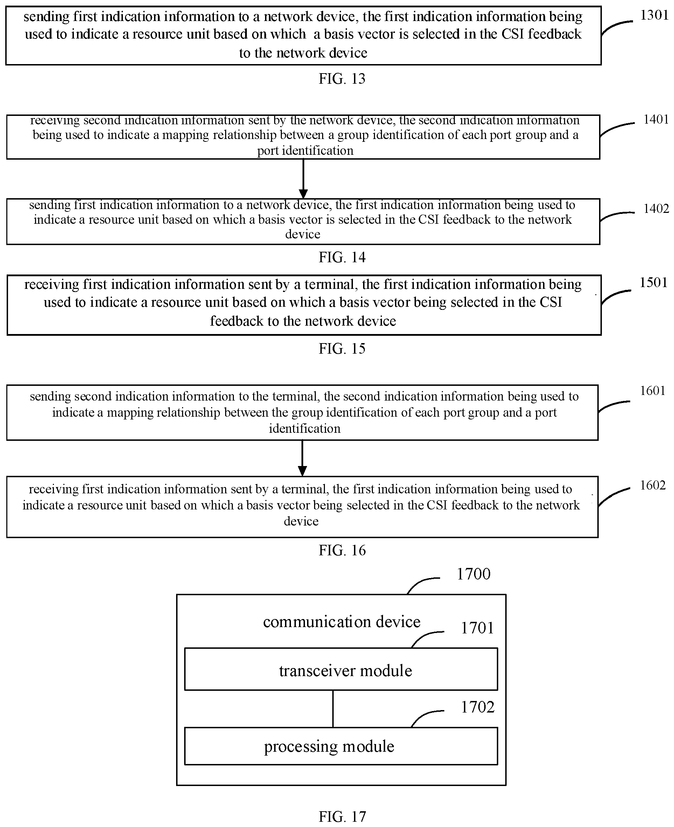

In the disclosure, the terminal may also determine the resource unit based on which the basis vector is selected, and send the resource unit determined to the network device. Description is made in detail below to a method for determining a CSI feedback with reference to FIG. 13 to FIG. 16.

Please refer to FIG. 13, which is a flow chart illustrating a method for determining a CSI feedback according to an embodiment of the disclosure. The method is performed by a terminal. As illustrated in FIG. 13, the method may include, but is not limited to, the following. At block 1301, first indication information is sent to a network device, in which the first indication information is used to indicate a resource unit based on which a basis vector is selected in the CSI feedback to the network device. The basis vector includes at least one of a beam basis vector or a frequency domain basis vector. The resource unit includes at least one of: one CSI RS resource, multiple CSI RS resources, one port group of one CSI RS resource, or multiple port groups of one CSI RS resource.

Alternatively, the SD basis and the FD basis may be selected based on different resource units. That is, the network device may indicate a resource unit corresponding to the beam basis vector and a resource unit corresponding to the frequency domain basis vector, respectively. For example, the FD basis is selected based on one CSI RS resource, and the SD basis is selected based on multiple CSI RS resources, etc., which is not limited in the disclosure.

Alternatively, the first indication information includes any one of: a group identification of at least one CSI RS set; a group identification of at least one CSI RS resource; a group identification of one port group of one CSI RS resource; or a group identification of multiple port groups of one CSI RS resource.

For example, in case that the first indication information includes the group identification of the at least one CSI RS set, it represents that terminal selects the basis vector based on one or more CSI RS resources in the at least one CSI RS set. In detail, in case that each CSI RS set only includes one CSI RS resource, it represents that the terminal selects the basis vector based on the CSI RS resource in each CSI RS set. Further, in case that each CSI RS set only includes one CSI RS resource and the first indication information also indicates that at least two CSI RS sets are a group or indicates a group identification corresponding to at least two CSI RS sets, it represents that the terminal selects the basis vector based on the at least two CSI RS resources included in the at least two CSI RS sets in the group. In case that each CSI RS set includes one or more CSI RS resources, it represents that the terminal selects the basis vector based on the one or more CSI RS resources in each CSI RS set. Or, in case that the first indication information includes the group identification of the at least one CSI RS resource, it represents that the terminal selects the basis vector based on the at least one (one or more) CSI RS resources. For example, in case that the first indication information also indicates that the CSI RS resource #1 and the CSI RS resource #2 are a group or indicates a group identification corresponding to the CSI RS resource #1 and the CSI RS resource #2, it represents that the terminal selects the basis vector with the CSI RS resource #1 and the CSI resource #2 as a resource unit. Or, in case that the first indication information indicates the CSI RS resource #3, it represents that the terminal selects the basis vector with the CSI RS resource #3 as a resource unit. Or, in case that the first indication information includes a group identification of one port group of one CSI RS resource, it represents that the terminal selects the basis vector based on the port group. For example, the first indication information includes a group identification of a port group #2 of the CSI RS resource #3, it represents that the terminal selects the basis vector with the port group #2 of the CSI RS resource #3 as a resource unit. Or, in case that the first indication information includes a group identification of multiple port groups of one CSI RS resource, it represents that the terminal selects the basis vector based on the multiple port groups. For example, in case that the first indication information indicates that a port group #2 and a port group #4 of the CSI RS resource #3 are one group or a group identification corresponding to a port group #2 and a port group #4 of the CSI RS resource #3, it presents that the terminal selects the basis vector with the port group #2 and the port group #4 of the CSI RS resource #3 as the resource unit.

In the disclosure, the terminal and the network device determine the resource unit based on which the basis vector is selected, and then determine whether the basis vector selected is for a TRP or a TRP group based on a correspondence between the resource unit and the TRP.

For example, different TRPs correspond to different CSI RS resources. In case that the resource unit based on which the basis vector is selected includes one CSI RS resource, that is, the basis vector is selected for the TRP corresponding to the CSI RS resource. Or, in case that the resource unit based on which the basis vector is selected includes the multiple CSI RS resources, the basis vector is selected for multiple TRPs corresponding to the multiple CSI RS resources, that is, for the TRP group. Alternatively, different TRPs may correspond to different port groups of one CSI RS resource. In case that the resource unit based on which the basis vector is selected includes one port group of one CSI RS resource, the basis vector is selected for one TRP corresponding to the port group of the CSI RS resource. Or, in case that the resource unit based on which the basis vector is selected includes the multiple port groups of one CSI RS resource, the basis vector is selected for multiple TRPs corresponding to the multiple port groups of the CSI RS resource, that is, for the TRP group.

Alternatively, the terminal may send the first indication information based on the CSI feedback.

Alternatively, the CSI feedback may include a first indication domain and a second indication domain, the first indication information is included in the first indication domain, and a basis vector corresponding to each resource unit is included in the second indication domain.

A size reported by the CSI may vary due to a case that the terminal determines the resource unit based on which the basis vector is selected. In this case, each TRP selects the basis vector independently, for example, for four TRPs, there needs four signalings. In case that the multiple TRPs may select the basis vector together, the signaling may be reduced accordingly. However, in order to facilitate the base station to decode the signaling of the CSI feedback, the first indication domain indicates which TRPs are independently determined and which TRPs are jointly determined. Then the second indication domain may further indicate the basis vector selected by each TRP or TRP group.

In the disclosure, the terminal indicates the resource unit based on which the basis vector is selected to the network device by the first indication information, such that the network device may determine the resource unit based on which the terminal selects the basis vector. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 14, which is a flow chart illustrating a method for determining a CSI feedback according to another embodiment of the disclosure. The method is performed by a terminal. As illustrated in FIG. 14, the method may include, but is not limited to, the following. At block 1401, second indication information sent by the network device is received, in which the second indication information indicates a mapping relationship between a group identification of each port group and a port identification.

For example, the mapping relationship between each port group and the port identification may be one of the following.

Mapping relationship 1: each port group corresponds to the same number of ports, and the ports are consecutive. For example, one CSI RS resource corresponds to 32 ports with port identifications from #0 to #31. In case that the 32 ports are divided into 4 port groups, the mapping relationship 1 is that: ports #0 to #7 are determined as a first port group, ports #8 to #15 are determined as a second port group, ports #16 to #23 are determined as a third port group, and ports #24 to #31 are determined as a fourth port group. Or, in case that the 32 ports are divided into 2 port groups, the mapping relationship 1 is that: ports #0 to #15 are determined as a first port group, and ports #16 to #31 are determined as a second port group.

Mapping relationship 2: each port group corresponds to the same number of ports, but each two ports are not consecutive. For example, one CSI RS resource corresponds to 32 ports with port identifications from #0 to #31. In case that the 32 ports are divided into 4 port groups, a port identification corresponding to an i^{th} port is 4N+i-1, a value of i is 1, 2, 3 or 4, and N is an integer from 0 to 7. That is, the mapping relationship 2 is that: ports #0, #4, #8, #12, #16, #20, #24 and #28 are determined as a first port group, ports #1, #5, #9, #13, #17, #21, #25, #29 are determined as a second port group, ports #2, #6, #10, #14, #18, #22, #26, #30 are determined as a third port group, and ports #3, #7, #11, #15, #19, #23, #27, #31 are determined as a fourth port group. Or, in case that the 32 ports are divided into 2 port groups, the port identification corresponding to the i^{th} port is 2N+i-1, a value of i is 1 or 2, and N is an integer from 0 to 15. That is, the mapping relationship 2 is that: ports with port identifications of even numbers are determined as a first port group, and ports with port identifications of odd numbers are determined as a second port group.

Mapping relationship 3: each port group corresponds to the same number of ports and each two ports are consecutive. For example, one CSI RS resource corresponds to 32 ports with port identifications from #0 to #31. In case that the 32 ports are divided into 4 port groups, 32 ports are grouped first, that is, each 8 consecutive ports are a group, the 8 ports in each group include 4 groups of 2 consecutive ports, and the 4 groups of 2 consecutive ports are distributed into different port groups. That is, the mapping relationship 3 is that: ports #0, #1, #8, #9, #16, #17, #24, #25 are determined as a first port group, ports #2, #3, #10, #11, #18, #19, #26, #27 are determined as a second port group, ports #4, #5, #12, #13, #20, #21, #28, #29 are determined as a third port group, and ports #6, #7, #14, #15, #22, #23, #30, #31 are determined as a fourth port group. Or, in case that the 32 ports are divided into 2 port groups, the 32 ports are grouped first, that is, each 4 consecutive ports are a group, the 4 ports in each group include 2 groups of 2 consecutive ports, and the 2 groups of 2 consecutive ports are distributed into different port groups. That is, the third mapping relationship 3 is that: ports #0, #1, #4, #5, #8, #9, #12, #13, #16, #17, #20, #21, #24, #25, #28, #29 are determined as a first port group, and remaining ports are determined as a second port group.

Mapping relationship 4: each port group corresponds to the same number of ports and each four ports are consecutive. For example, one CSI RS resource corresponds to 32 ports with port identifications from #0 to #31. In case that the 32 ports are divided into 4 port groups, 32 ports are grouped first, that is, each 16 consecutive ports are a group, the 16 ports in each group include 4 groups of 4 consecutive ports, and the 4 groups of 4 consecutive ports are distributed into different port groups. That is, the mapping relationship 4 is that: ports #0, #1, #2, #3, #16, #17, #18, #19 are determined as a first port group, ports #4, #5, #6, #7, #20, #21, #22, #23 are determined as a second port group, ports #8, #9, #10, #11, #24, #25, #26, #27 are determined as a third port group, and ports #12, #13, #14, #15, #28, #29, #30, #31 are determined as a fourth port group. Or, in case that the 32 ports are divided into two port groups, 32 ports are grouped first, that each 8 consecutive ports are a group, the 8 ports in each group include 2 groups of 4 consecutive ports, and the 2 groups of 4 consecutive ports are distributed into different port groups. That is, the mapping relationship 4 is that: ports #0, #1, #2, #3, #8, #9, #10, #11, #16, #17, #18, #19, #24, #25, #26, #27 are determined as a first port group, and remaining ports are determined as a second port group.

Alternatively, the terminal may also determine the mapping relationship between each port group and the port identification based on a default rule. A default mapping relationship includes any one of the above mapping relationships 1,2,3,4. For example, the default mapping relationship is the mapping relationship 1, that is, each port group includes the same number of consecutive ports, and one CSI RS resource corresponds to the 32 ports with the port identifications from #0 to #31. In case that the ports are divided into 4 port groups, it may be determined that the port identifications from #0 to #7 are one port group, and the port identifications from #8 to #15 are one port group, the port identifications from #16 to #23 are one port group, and the port identifications from #24 to #31 are one port group, which is not limited in the disclosure.

At block 1402, first indication information is sent to a network device, in which the first indication information is used to indicate a resource unit based on which a basis vector is selected in the CSI feedback to the network device. For the detailed implementation about block 1402, please refer to a detailed description of any embodiment of the disclosure, which will not be repeated here.

In the disclosure, the terminal indicates the resource unit based on which the basis vector is selected to the network device by the first indication information, such that the network device may determine the resource unit based on which the terminal selects the basis vector. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 15, which is a flow chart illustrating a method for determining a CSI feedback according to another embodiment of the disclosure. The method is performed by a network device. As illustrated in FIG. 15, the method may include, but is not limited to, the following. At block 1501, first indication information sent by a terminal is received, in which the first indication information is used to indicate a resource unit based on which a basis vector is selected in the CSI feedback to the network device. The basis vector includes at least one of a beam basis vector or a frequency domain basis vector. The resource unit includes at least one of: one CSI RS resource, multiple CSI RS resources, one port group of one CSI RS resource, or multiple port groups of one CSI RS resource.

Alternatively, the SD basis and the FD basis may be selected based on different resource units. That is, the terminal may indicate a resource unit corresponding to the beam basis vector and a resource unit corresponding to the frequency domain basis vector, respectively. For example, the FD basis is selected based on one CSI RS resource, and the SD basis is selected based on multiple CSI RS resources, etc., which is not limited in the disclosure.

Alternatively, the first indication information may include any one of: a group identification of at least one CSI RS set; a group identification of at least one CSI RS resource; a group identification of one port group of one CSI RS resource; and a group identification of multiple port groups of one CSI RS resource.

For example, in case that the first indication information includes the group identification of the at least one CSI RS set, it represents that terminal selects the basis vector based on one or more CSI RS resources in the at least one CSI RS set. In detail, in case that each CSI RS set only includes one CSI RS resource, it represents that the terminal selects the basis vector based on the CSI RS resource in each CSI RS set. Further, in case that each CSI RS set only includes one CSI RS resource and the first indication information also indicates that at least two CSI RS sets are a group or indicates a group identification corresponding to at least two CSI RS sets, it represents that the terminal selects the basis vector based on the at least two CSI RS resources included in the at least two CSI RS sets in the group. In case that each CSI RS set includes one or more CSI RS resources, it represents that the terminal selects the basis vector based on the one or more CSI RS resources in each CSI RS set. Or, in case that the first indication information includes the group identification of the at least one CSI RS resource, it represents that the terminal selects the basis vector based on the at least one (one or more) CSI RS resources. For example, in case that the first indication information also indicates that the CSI RS resource #1 and the CSI RS resource #2 are a group or indicates a group identification corresponding to the CSI RS resource #1 and the CSI RS resource #2, it represents that the terminal selects the basis vector with the CSI RS resource #1 and the CSI resource #2 as a resource unit. Or, in case that the first indication information indicates the CSI RS resource #3, it represents that the terminal selects the basis vector with the CSI RS resource #3 as a resource unit. Or, in case that the first indication information includes a group identification of one port group of one CSI RS resource, it represents that the terminal selects the basis vector based on the port group. For example, the first indication information includes a group identification of a port group #2 of the CSI RS resource #3, it represents that the terminal selects the basis vector with the port group #2 of the CSI RS resource #3 as a resource unit. Or, in case that the first indication information includes a group identification of multiple port groups of one CSI RS resource, it represents that the terminal selects the basis vector based on the multiple port groups. For example, in case that the first indication information indicates that a port group #2 and a port group #4 of the CSI RS resource #3 are one group or a group identification corresponding to a port group #2 and a port group #4 of the CSI RS resource #3, it presents that the terminal selects the basis vector with the port group #2 and the port group #4 of the CSI RS resource #3 as the resource unit.

In the disclosure, the terminal and the network device determine the resource unit based on which the basis vector is selected, and then determine whether the basis vector selected is for a TRP or a TRP group based on a correspondence between the resource unit and the TRP.

For example, different TRPs correspond to different CSI RS resources. In case that the resource unit based on which the basis vector is selected includes one CSI RS resource, that is, the basis vector is selected for the TRP corresponding to the CSI RS resource. Or, in case that the resource unit based on which the basis vector is selected includes the multiple CSI RS resources, the basis vector is selected for multiple TRPs corresponding to the multiple CSI RS resources, that is, for the TRP group. Alternatively, different TRPs may correspond to different port groups of one CSI RS resource. In case that the resource unit based on which the basis vector is selected includes one port group of one CSI RS resource, the basis vector is selected for one TRP corresponding to the port group of the CSI RS resource. Or, in case that the resource unit based on which the basis vector is selected includes the multiple port groups of one CSI RS resource, the basis vector is selected for multiple TRPs corresponding to the multiple port groups of the CSI RS resource, that is, for the TRP group.

Alternatively, the network device may determine the first indication information based on the CSI feedback sent by the terminal.

Alternatively, the CSI feedback may include a first indication domain and a second indication domain, the first indication information is included in the first indication domain, and a basis vector corresponding to each resource unit is included in the second indication domain.

A size reported by the CSI may vary due to a case that the terminal determines the resource unit based on which the basis vector is selected. In this case, each TRP selects the basis vector independently, for example, for four TRPs, there needs four signalings. In case that the multiple TRPs may select the basis vector together, the signaling may be reduced accordingly. However, in order to facilitate the base station to decode the signaling of the CSI feedback, the first indication domain indicates which TRPs are independently determined and which TRPs are jointly determined. Then the second indication domain may further indicate the basis vector selected by each TRP or TRP group.

In the disclosure, the network device receives the resource unit based on which the basis vector is selected and indicated by the terminal via the first indication information, such that the network device may determine the resource unit based on which the terminal selects the basis vector. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 16, which is a flow chart illustrating a method for determining a CSI feedback according to another embodiment of the disclosure. The method is performed by a network device. As illustrated in FIG. 16, the method may include, but is not limited to, the following. At block 1601, second indication information is sent to the terminal, in which the second indication information indicates a mapping relationship between a group identification of each port group and a port identification.

For example, the mapping relationship between each port group and the port identification may be one of the following.

Mapping relationship 1: each port group corresponds to the same number of ports, and the ports are consecutive. For example, one CSI RS resource corresponds to 32 ports with port identifications from #0 to #31. In case that the 32 ports are divided into 4 port groups, the mapping relationship 1 is that: ports #0 to #7 are determined as a first port group, ports #8 to #15 are determined as a second port group, ports #16 to #23 are determined as a third port group, and ports #24 to #31 are determined as a fourth port group. Or, in case that the 32 ports are divided into 2 port groups, the mapping relationship 1 is that: ports #0 to #15 are determined as a first port group, and ports #16 to #31 are determined as a second port group.

Mapping relationship 2: each port group corresponds to the same number of ports, but each two ports are not consecutive. For example, one CSI RS resource corresponds to 32 ports with port identifications from #0 to #31. In case that the 32 ports are divided into 4 port groups, a port identification corresponding to an i^{th} port is 4N+i-1, a value of i is 1, 2, 3 or 4, and N is an integer from 0 to 7. That is, the mapping relationship 2 is that: ports #0, #4, #8, #12, #16, #20, #24 and #28 are determined as a first port group, ports #1, #5, #9, #13, #17, #21, #25, #29 are determined as a second port group, ports #2, #6, #10, #14, #18, #22, #26, #30 are determined as a third port group, and ports #3, #7, #11, #15, #19, #23, #27, #31 are determined as a fourth port group. Or, in case that the 32 ports are divided into 2 port groups, the port identification corresponding to the i^{th} port is 2N+i-1, a value of i is 1 or 2, and N is an integer from 0 to 15. That is, the mapping relationship 2 is that: ports with port identifications of even numbers are determined as a first port group, and ports with port identifications of odd numbers are determined as a second port group.

Mapping relationship 3: each port group corresponds to the same number of ports and each two ports are consecutive. For example, one CSI RS resource corresponds to 32 ports with port identifications from #0 to #31. In case that the 32 ports are divided into 4 port groups, 32 ports are grouped first, that is, each 8 consecutive ports are a group, the 8 ports in each group include 4 groups of 2 consecutive ports, and the 4 groups of 2 consecutive ports are distributed into different port groups. That is, the mapping relationship 3 is that: ports #0, #1, #8, #9, #16, #17, #24, #25 are determined as a first port group, ports #2, #3, #10, #11, #18, #19, #26, #27 are determined as a second port group, ports #4, #5, #12, #13, #20, #21, #28, #29 are determined as a third port group, and ports #6, #7, #14, #15, #22, #23, #30, #31 are determined as a fourth port group. Or, in case that the 32 ports are divided into 2 port groups, the 32 ports are grouped first, that is, each 4 consecutive ports are a group, the 4 ports in each group include 2 groups of 2 consecutive ports, and the 2 groups of 2 consecutive ports are distributed into different port groups. That is, the third mapping relationship 3 is that: ports #0, #1, #4, #5, #8, #9, #12, #13, #16, #17, #20, #21, #24, #25, #28, #29 are determined as a first port group, and remaining ports are determined as a second port group.

Mapping relationship 4: each port group corresponds to the same number of ports and each four ports are consecutive. For example, one CSI RS resource corresponds to 32 ports with port identifications from #0 to #31. In case that the 32 ports are divided into 4 port groups, 32 ports are grouped first, that is, each 16 consecutive ports are a group, the 16 ports in each group include 4 groups of 4 consecutive ports, and the 4 groups of 4 consecutive ports are distributed into different port groups. That is, the mapping relationship 4 is that: ports #0, #1, #2, #3, #16, #17, #18, #19 are determined as a first port group, ports #4, #5, #6, #7, #20, #21, #22, #23 are determined as a second port group, ports #8, #9, #10, #11, #24, #25, #26, #27 are determined as a third port group, and ports #12, #13, #14, #15, #28, #29, #30, #31 are determined as a fourth port group. Or, in case that the 32 ports are divided into two port groups, 32 ports are grouped first, that each 8 consecutive ports are a group, the 8 ports in each group include 2 groups of 4 consecutive ports, and the 2 groups of 4 consecutive ports are distributed into different port groups. That is, the mapping relationship 4 is that: ports #0, #1, #2, #3, #8, #9, #10, #11, #16, #17, #18, #19, #24, #25, #26, #27 are determined as a first port group, and remaining ports are determined as a second port group.

Alternatively, the network device may also not send the second indication information to the terminal, thus the terminal may determine the mapping relationship between each port group and the port identification based on a default rule. A default mapping relationship includes any one of the above mapping relationships 1,2,3,4. For example, the default mapping relationship is the mapping relationship 1, that is, each port group includes the same number of consecutive ports, and one CSI RS resource corresponds to the 32 ports with the port identifications from #0 to #31. In case that the ports are divided into 4 port groups, it may be determined that the port identifications from #0 to #7 are one port group, and the port identifications from #8 to #15 are one port group, the port identifications from #16 to #23 are one port group, and the port identifications from #24 to #31 are one port group, which is not limited in the disclosure.

At block 1602, first indication information is received by the terminal, in which the first indication information is used to indicate a resource unit based on which a basis vector is selected in the CSI feedback to the network device. For the detailed implementation about block 1602, please refer to a detailed description of any embodiment of the disclosure, which will not be repeated here.

In the disclosure, the network device receives the resource unit based on which the basis vector is selected and indicated by the terminal via the first indication information, such that the network device may determine the resource unit based on which the terminal selects the basis vector. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

Please refer to FIG. 17, which a block diagram illustrating a communication device 1700 according to embodiments of the disclosure. The communication device 1700 illustrated in FIG. 17 includes a transceiver module 1701. The transceiver module 1701 includes a sending module and/or a receiving module. The sending module is configured to implement a sending function, the receiving module is configured to implement a receiving function, and the transceiver module 1701 is configured to implement the sending function and/or receiving function.

It is understood that the communication device 1700 may be a network device, a device in a network device, or a device that may be used in conjunction with a network device.

The communication device 1700 is in the side of the terminal, in which the transceiver module 1701 is configured to send first indication information to a terminal, in which the first indication information is used to indicate a resource unit based on which a basis vector is selected in the CSI feedback to the terminal, and the basis vector includes at least one of a beam basis vector or a frequency domain basis vector.

Alternatively, the resource unit includes at least one of: one CSI RS resource, multiple CSI RS resources, one port group of one CSI RS resource, or multiple port groups of one CSI RS resource.

Alternatively, the first indication information includes at least one first CSI RS set, and each first CSI RS set includes one CSI RS resource.

Alternatively, the first indication information is used to indicate to the terminal the resource unit being the CSI RS resource included in each first CSI RS set.

Alternatively, the first indication information includes multiple first CSI RS sets. The transceiver module 1701 is further configured to send second indication information to the terminal. The second indication information is used to indicate to the terminal that at least two first CSI RS sets are a group or to indicate a group identification corresponding to at least two first CSI RS sets.

Alternatively, the first indication information includes at least one second CSI RS set. Each second CSI RS set includes one or more CSI RS resources, and the first indication information is used to indicate to the terminal the resource unit being the one or more CSI RS resources included in each second CSI RS set.

Alternatively, the first indication information includes one third CSI RS set. The third CSI RS set includes multiple CSI RS resources.

Alternatively, the first indication information is used to indicate to the terminal the resource unit being one of the multiple CSI RS resources in the third CSI RS set.

Alternatively, the transceiver module 1701 is further configured to send third indication information to the terminal. The third indication information is used to indicate to the terminal that at least two CSI RS resources in the third CSI RS set are a group or to indicate a group identification corresponding to at least two CSI RS resources in the third CSI RS set.

Alternatively, the first indication information includes one CSI RS resource, and the CSI RS resource includes N first port groups, where N is a positive integer.

Alternatively, the first indication information is configured to indicate to the terminal the resource unit being each first port group of the CSI RS resource.

Alternatively, the N is greater than 1. The transceiver module 1701 is further configured to send fourth indication information to the terminal. The fourth indication information is used to indicate to the terminal that at least two first port groups are a group or to indicate a group identification corresponding to at least two first port groups.

Alternatively, the transceiver module 1701 is further configured to send fifth indication information to the terminal. The fifth indication information is used to indicate to the terminal a mapping relationship between each first port group and at least one port identification.

In the disclosure, the network device sends the resource unit based on which the terminal selects the basis vector to the terminal. Thus, it is ensured that the understanding of the terminal is consistent with the understanding of the network device for the resource unit based on which the basis vector is selected in the CSI feedback, thus improving the transmission performance of coherent joint transmission based on the multiple TRPs.

It should be noted that the above device embodiments are obtained based on method embodiments, and the detailed description can be referred to the part of method embodiments, which will not be repeated here.

It is understood that the communication device 1700 may be a terminal, a device in a terminal, or a device that may be used in conjunction with a terminal.

The communication device 1700 is in the side of the terminal, in which the transceiver module 1701 is configured to receive first indication information sent by the network device, in which the first indication information is used to indicate to the terminal a resource unit based on which a basis vector is selected in the CSI feedback. The basis vector includes at least one of a beam basis vector or a frequency domain basis vector.

Alternatively, the resource unit includes at least one of: one CSI RS resource, multiple CSI RS resources, one port group of one CSI RS resource, or multiple port groups of one CSI RS resource.

Alternatively, the first indication information includes at least one first CSI RS set. Each first CSI RS set includes a CSI RS resource.

Alternatively, the processing module 1702 is configured to determine the CSI RS resource included in each first CSI RS set as the resource unit, respectively.

Alternatively, the transceiver module 1701 is further configured to, in response to the first indication information including multiple first CSI RS sets, send second indication information to the terminal. The second indication information is used to indicate to the terminal that at least two first CSI RS sets are a group or to indicate a group identification corresponding to at least two first CSI RS sets. The processing module 1702 is further configured to determine CSI RS resources included in at least two first CSI RS sets as the resource unit.

Alternatively, the first indication information includes at least one second CSI RS set, each second CSI RS set includes one or more CSI RS resources, and the one or more CSI RS resources included in each second CSI RS set are respectively determined as the resource unit.

Alternatively, the first indication information includes one third CSI RS set. Third CSI RS set includes multiple CSI RS resources.

Alternatively, the processing module 1702 is further configured to determine one of the multiple CSI RS resources included in the third CSI RS set as the resource unit.

Alternatively, the transceiver module 1701 is further configured to receive third indication information sent by the network device. The third indication information is used to indicate to the terminal that at least two CSI RS resources in the third CSI RS set are a group or to indicate a group identification corresponding to at least two CSI RS resources in the third CSI RS set. The processing module 1702 is further configured to determine at least two CSI RS resources in the group as the resource unit.

Alternatively, the first indication information includes one CSI RS resource, and the CSI RS resource includes N first port groups, where N is a positive integer.

Alternatively, the processing module is further configured to determine a first port group of the CSI RS resource as the resource unit.

Alternatively, the transceiver module 1701 is further configured to receive fourth indication information sent by the network device in response to N being greater than 1. The fourth indication information is used to indicate to the terminal that at least two first port groups are a group or to indicate a group identification corresponding to at least two first port groups. The processing module 1702 is further configured to determine at least two first port groups in the group as the resource unit.

Alternatively, the transceiver module 1701 is further configured to receive fifth indication information sent by the network device. The fifth indication information is used to indicate a mapping relationship between each first port group and at least one port identification to the terminal.

In the disclosure, the terminal receives the resource unit, sent by the network device, based on which the terminal selects the basis vector. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

It should be understood that the communication device 1700 may also be another terminal, a device in the terminal, or a device that may be used in combination with the terminal.

The communication device 1700 is in the side of the terminal. The transceiver module 1701 is configured to send first indication information to a network device, in which the first indication information is used to indicate a resource unit based on which a basis vector is selected in the CSI feedback to the network device, and the basis vector includes at least one of a beam basis vector or a frequency domain basis vector.

Alternatively, the resource unit includes at least one of: one CSI RS resource, multiple CSI RS resources, one port group of one CSI RS resource, or multiple port groups of one CSI RS resource.

Alternatively, the first indication information includes any one of: a group identification of at least one CSI RS set; a group identification of at least one CSI RS resource; a group identification of one port group of one CSI RS resource; and a group identification of multiple port group identifications of one CSI RS resource.

Alternatively, the transceiver module 1701 is further configured to receive second indication information sent by the network device. The second indication information is used to indicate a mapping relationship between the group identification of each port group and a port identification. Alternatively, the processing module 1702 may further be configured to determine a mapping relationship between the group identification of each port group and a port identification based on a default rule.

Alternatively, the CSI feedback includes a first indication domain and a second indication domain, the first indication information is included in the first indication domain, and a basis vector corresponding to each resource unit is included in the second indication domain.

In the disclosure, the terminal may send the resource unit based on which the terminal selects the basis vector to the network device. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

**It** should be understood that the communication device 1700 may also be another network device, a device in the network device, or a device that may be used in combination with the network device.

The communication device 1700 is in the side of the network device. The transceiver module 1701 is configured to receive first indication information sent by a terminal, in which the first indication information is used to indicate a resource unit based on which a basis vector is selected in the CSI feedback to the network device, and the basis vector includes at least one of a beam basis vector or a frequency domain basis vector.

Alternatively, the resource unit includes at least one of: one CSI RS resource, multiple CSI RS resources, one port group of one CSI RS resource, or multiple port groups of one CSI RS resource.

Alternatively, the first indication information includes any one of: a group identification of at least one CSI RS set; a group identification of at least one CSI RS resource; a group identification of one port group of one CSI RS resource; and a group identification of multiple port groups of one CSI RS resource.

Alternatively, the transceiver 1702 is further configured to send second indication information to the terminal, in which the second indication information is used to indicate a mapping relationship between the group p identification of each port group and a port identification.

Alternatively, the transceiver module 1701 is further configured to receive the CSI feedback sent by the terminal, in which the CSI feedback includes a first indication domain and a second indication domain, the first indication information is included in the first indication domain, and a basis vector corresponding to each resource unit is included in the second indication domain.

In the disclosure, the network device may receive the resource unit, sent by the terminal, based on which the terminal selects the basis vector. Thus, it is ensured that the understanding of the terminal is consistent with the understanding of the network device for the resource unit based on which the basis vector is selected in the CSI feedback, thus improving the transmission performance of the coherent joint transmission based on the multiple TRPs.

It should be noted that the above device embodiments are obtained based on method embodiments, and the detailed description may be referred to the method embodiments, which will not be repeated here.

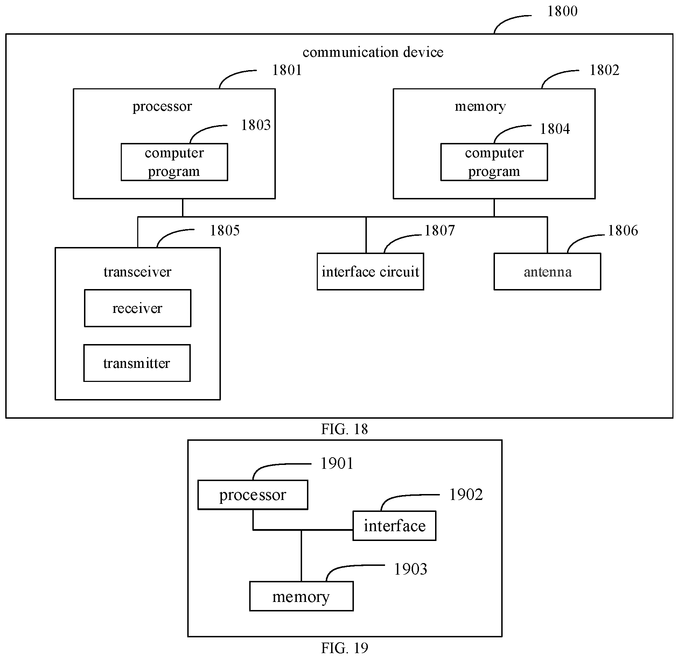

Please refer to FIG. 18, which is a block diagram illustrating a communication device 1800 according to another embodiment of the disclosure. The communication device 1800 may be a network device, a terminal, a chip, a chip system, may also be a chip, a chip system, or a processor that supports a network device to realize the above method, or may also be a chip, a chip system, a processor that supports the terminal to realize the above method. The device may be configured to realize the method described in the above method embodiments. For details, please refer to the description in the above method embodiments. The communication device 1800 may include one or more processors 1801. The processor 1801 may be a general-purpose processor or a dedicated processor. For example, it may be a baseband processor or a central processing unit. The baseband processor may be configured to process a communication protocol and communication data, and the central processing unit may be configured to control a communication device (such as a base station, a baseband chip, a terminal, a terminal chip, a distributed unit (DU) or central unit (CU), etc.), execute a computer program, and process computer program data.

Alternatively, the communication device 1800 may also include one or more memory 1802 for storing a computer program 1804. The processor 1801 is configured to execute the computer program 1804, to cause the communication device 1800 to realize the method in the above method embodiments. Alternatively, the memory 1802 may be configured to store data. The communication device 1800 and the memory 1802 may be set separately or be integrated together.

Alternatively, the communication device 1800 may also include a transceiver 1805 and an antenna 1806. The transceiver 1805 may be called a receiving and sending unit, a transceiver machine, or a receiving and sending circuit, etc., which is configured to realize a receiving and sending function. The transceiver 1805 may include a receiver and a transmitter. The receiver may be called a receiving machine, a receiving circuit, etc., which is configured to realize a receiving function. The transmitter may be called a sender, a transmitting circuit, etc., which is configured to realize a transmitting function.

Alternatively, the communication device 1800 may also include one or more interface circuits 1807. The interface circuit 1807 is configured to receive code instructions and transmit the code instructions to the processor 1801. The processor 1801 runs the code instructions to cause the communication device 1800 to perform the method in the above method embodiments. The communication device 1800 is a network device. The transceiver 1805 is configured to perform actions at block 201 in FIG. 2, actions at block 301 in FIG. 3, actions at block 401 in FIG. 4, and so on. The communication device 1800 is a terminal. The transceiver 1805 is configured to perform actions at block 601 in FIG. 6, actions at block 701 in FIG. 7, actions at block 801 and block 802 in FIG. 8, and so on. The processor 1801 is configured to perform actions at block 701 in FIG. 7, actions at block 803 in FIG. 8, and so on. Alternatively, the communication device 1800 is another terminal. The transceiver 1805 is configured to perform actions at block 1301 in FIG. 13, actions at block 1401 and block 1402 in FIG. 14, and so on. The communication device 1800 is a network device. The transceiver 1805 is configured to perform actions at block 1501 in FIG. 15, actions at block 1601 actions at block 1602 in FIG. 16, and so on.

In an implementation, the processor 1801 may include a transceiver for implementing a receiving and sending function. For example, the transceiver may be a receiving and sending circuit, an interface, or an interface circuit. The receiving and sending circuit, the interface, or the interface circuit configured to realize the receiving and sending function may be separated or integrated. The receiving and sending circuit, the interface, or the interface circuit may be configured to read and write codes/data, or the receiving and sending circuit, the interface, or the interface circuit may be configured to transmit or deliver signals.

In an implementation, the processor 1801 may store a computer program 1803. The computer program 1803 is run in the processor 1801, to cause the communication device 1800 to realize the method in the above method embodiments. The computer program 1803 may be solidified in the processor 1801. In this case, the processor 1801 may be implemented by hardware.

In an implementation, the communication device 1800 includes a circuit that may implement the sending/receiving/communicating function in the above method embodiments. The processor and transceiver in the disclosure may be realized in an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device or an access device (such as the terminal in the method embodiments), but the scope of the communication device in the disclosure is not limited to this, and the structure of the communication device may not be limited by FIG. 9. The communication device may be an independent device or part of a large device. For example, the communication device may be:
(1) an independent IC, a chip, a chip system, or a subsystem;
(2) a collection including one or more IC, alternatively, the IC collection also including storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.; or
(6) others.

For the case where the communication device may be the chip or the chip system, please refer to the block diagram of a chip illustrated in FIG. 19. The chip illustrated in FIG. 19 includes a processor 1901 and an interface 1903. There may be one or more processors 1901, and there may be one or more interfaces 1903.

For the case where the chip is configured to realize functions of the network device in the embodiments of the disclosure, the interface 1903 is configured to perform the actions at block 201 in FIG. 2, the actions at block 301 in FIG. 3, the actions at block 401 in FIG. 4, and so on.

For the case where the chip is configured to realize functions of the terminal in the embodiments of the disclosure, the interface 1903 is configured to perform the actions at block 601 in FIG. 6, the actions at block 701 in FIG. 7, the actions at block 801, and the actions at block 802 in FIG. 8, etc.

For the case where the chip is configured to realize functions of another terminal in the embodiments of the disclosure, the interface 1903 is configured to perform the actions at block 1301 in FIG. 13, the actions at block 1401 and block 1402 in FIG. 14, and so on.

For the case where the chip is configured to realize functions of another network device in the embodiments of the disclosure, the interface 1903 is configured to perform the actions at block 1501 in FIG. 15, the actions at block 1601 and block 1602 in FIG. 16, and so on.

Alternatively, the chip also includes a memory 1903, which is configured to store necessary computer programs and data.

Those skilled in the art may also understand that the various illustrative logical blocks and steps listed in the embodiments of the disclosure may be implemented by electronic hardware, computer software, or their combination. Whether such a function is realized in hardware or software depends on specific applications and design requirements of the overall system. Those skilled in the art may, for each specific application, use a variety of methods to achieve the above function, but such implementation shall not be regarded as going beyond the scope of the protection of the embodiments of the disclosure.

The disclosure also provides a readable storage medium for storing instructions. The instructions are performed by a computer to realize any function of the above method embodiments.

The disclosure also provides a computer program product. The computer program product is performed by a computer to realize any function of the above method embodiments.

In the above embodiments, the functions may be implemented by software, hardware, firmware, or any combination of them in whole or partially. When implemented by software, the functions may be implemented in whole or in part in the form of a computer program product. The computer program product includes one or more computer programs. Procedures or functions according to embodiments of the disclosure are in whole or partially generated when the computer program is loaded and performed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center in a wire way (such as a coaxial cable, a fiber optic, a digital subscriber line (DSL)) or a wireless way (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

It should be understood that the term "a plurality of" in the disclosure refers to two or more than two, and other quantifiers are similar to it. The term "and/or" describes the relationship between associated objects, indicating that there may be three relationships, for example, A and/or B means A, A and B at the same time, and B. The character "/" generally indicates that the relationship between associated objects is an "or" relationship. The terms "a" and "the" in singular form also include plural forms unless the context clearly indicates other meanings.

It should be further understood that, although operations are described in a particular order in the accompanying drawings, it should not be understood as requiring these operations be performed in a particular order or in serial order, or requiring all the operations shown to be performed in order to obtain a desirable result. In a given environment, multitasking and parallel processing can be advantageous.

Those skilled in the art may understand that numerals "first", "second" and the like in the disclosure are only for the convenience of description, and are not used to limit the scope of the embodiments of the disclosure, and also indicate a sequential order.

The term "at least one" in the disclosure may also be described as one or more, and the more may be two, three, four, or more, which is not limited in the disclosure. In the embodiment of the disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that units and algorithm steps of the examples described in combination with embodiments of the disclosure may be implemented by an electronic hardware or a combination of an electronic hardware and computer software. Whether the functions are performed by the hardware or the software depends on a specific application and a design constraint of the technical solutions. Those skilled in the art may adopt different methods for each specific application to realize the described functions, but such implementation should not be considered as going beyond the scope of the disclosure.

Those skilled in the art may clearly understand that a detailed work process of a system, an apparatus and a unit described above may refer to a corresponding process in the above method embodiments, which will not be repeated here.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

The above are only implementations of the disclosure. However, the protection scope of the disclosure is not limited here. Changes and substitutions that may be easily considered by those skilled in the art shall be contained within the protection scope of the disclosure. Therefore, the protection scope of the disclosure shall be subject to the protection scope of claims.

## Claims

1. A method for determining a channel state information (CSI) feedback, performed by a network device, comprising:
sending first indication information to a terminal, wherein the first indication information is used to indicate a resource unit based on which a basis vector is selected in the CSI feedback to the terminal, and the basis vector comprises at least one of a beam basis vector or a frequency domain basis vector.

2. The method of claim 1, wherein the resource unit comprises at least one of: one CSI reference signal (RS) resource, a plurality of CSI RS resources, one port group of one CSI RS resource, or a plurality of port groups of one CSI RS resource.

3. The method of claim 1, wherein
the first indication information comprises at least one first CSI RS set, and each first CSI RS set comprises one CSI RS resource.

4. The method of claim 3, wherein
the first indication information is used to indicate to the terminal the resource unit being the CSI RS resource comprised in each first CSI RS set.

5. The method of claim 3, further comprising:
sending second indication information to the terminal in response to the first indication information comprising a plurality of first CSI RS sets, the second indication information being used to indicate to the terminal that at least two first CSI RS sets are a group or to indicate a group identification corresponding to at least two first CSI RS sets.

6. The method of claim 1, wherein
the first indication information comprises at least one second CSI RS set, each second CSI RS set comprises one or more CSI RS resources, and the first indication information is used to indicate to the terminal the resource unit being the one or more CSI RS resources comprised in each second CSI RS set.

7. The method of claim 1, wherein
the first indication information comprises one third CSI RS set, and the third CSI RS set comprises a plurality of CSI RS resources.

8. The method of claim 7, wherein
the first indication information is used to indicate to the terminal the resource unit being one of the plurality of CSI RS resources in the third CSI RS set.

9. The method of claim 7, further comprising:
sending third indication information to the terminal, the third indication information being used to indicate to the terminal that at least two CSI RS resources in the third CSI RS set are a group or to indicate a group identification corresponding to at least two CSI RS resources in the third CSI RS set.

10. The method of claim 1, wherein
the first indication information comprises one CSI RS resource, and the CSI RS resource comprises N first port groups, where N is a positive integer.

11. The method of claim 10, wherein
the first indication information is used to indicate to the terminal the resource unit being each first port group of the CSI RS resource.

12. The method of claim 10, further comprising:
sending fourth indication information to the terminal in response to N being greater than 1, the fourth indication information being used to indicate to the terminal that at least two first port groups are a group or to indicate group identifications corresponding to at least two first port groups.

13. The method of claim 10, wherein
fifth indication information is sent to the terminal, the fifth indication information is used to indicate a mapping relationship between each first port group and at least one port identification to the terminal.

14. A method for determining a channel state information (CSI) feedback, performed by a terminal, comprising:
receiving first indication information sent by a network device, wherein the first indication information is used to indicate a resource unit based on which a basis vector is selected in the CSI feedback to the terminal, and the basis vector comprises at least one of a beam basis vector or a frequency domain basis vector.

15. The method of claim 14, the resource unit comprises at least one of: one CSI reference signal (RS) resource, a plurality of CSI RS resources, one port group of one CSI RS resource, or a plurality of port groups of one CSI RS resource.

16. The method of claim 14, wherein the first indication information comprises at least one first CSI RS set, and each first CSI RS set comprises one CSI RS resource.

17. The method of claim 16, further comprising:
determining the CSI RS resource comprised in each first CSI RS set as the resource unit, respectively.

18. The method of claim 16, further comprising:
the first indication information comprising a plurality of first CSI RS sets, and receiving second indication information sent by the network device, the second indication information being used to indicate to the terminal that at least two first CSI RS sets are a group or to indicate a group identification corresponding to at least two first CSI RS sets; and
determining CSI RS resources comprised in the at least two first CSI RS sets as the resource unit.

19. The method of claim 14, further comprising:
the first indication information comprising at least one second CSI RS set, each second CSI RS set comprising one or more CSI RS resources, and determining the one or more CSI RS resources comprised in each second CSI RS set respectively as the resource unit.

20. The method of claim 14, wherein
the first indication information comprises one third CSI RS set, and the third CSI RS set comprises a plurality of CSI RS resources.

21. The method of claim 20, further comprising:
determining one of the plurality of CSI RS resources comprised in the third CSI RS set as the resource unit.

22. The method of claim 20, further comprising:
receiving third indication information sent by the network device, the third indication information being used to indicate to the terminal that at least two CSI RS resources in the third CSI RS set are a group or to indicate a group identification corresponding to at least two CSI RS resources in the third CSI RS set; and
determining the at least two CSI RS resources in the group as the resource unit.

23. The method of claim 14, wherein
the first indication information comprises one CSI RS resource, and the CSI RS resource comprises N first port groups, where N is a positive integer.

24. The method of claim 23, further comprising:
determining a first port group of the CSI RS resource as the resource unit.

25. The method of claim 23, further comprising:
N being greater than 1, receiving fourth indication information sent by the network device, the fourth indication information being used to indicate to the terminal that at least two first port groups are a group or to indicate a group identification corresponding to at least two first port groups; and
determining the at least two first port groups in the group as the resource unit.

26. The method of claim 14, wherein
fifth indication information sent by the network device is received, the fifth indication information is used to indicate a mapping relationship between each first port group and at least one port identification to the terminal.

27. A method for determining a channel state information (CSI) feedback, performed by a terminal, comprising:
sending first indication information to a network device, wherein the first indication information is used to indicate a resource unit based on which a basis vector is selected in the CSI feedback to the network device, and the basis vector comprises at least one of a beam basis vector or a frequency domain basis vector.

28. The method of claim 27, wherein the resource unit comprises at least one of: one CSI reference signal (RS) resource, a plurality of CSI RS resources, one port group of one CSI RS resource, or a plurality of port groups of one CSI RS resource.

29. The method of claim 27, wherein the first indication information comprises any one of:
a group identification of at least one CSI RS set;
a group identification of at least one CSI RS resource;
a group identification of a port group of a CSI RS resource; or
a group identification of a plurality of port groups of a CSI RS resource.

30. The method of claim 29, further comprising:
receiving second indication information sent by the network device, wherein the second indication information is used to indicate a mapping relationship between the group identification of each port group and a port identification; or
determining a mapping relationship between the group identification of each port group and a port identification based on a default rule.

31. The method of claim 27, wherein the CSI feedback comprises a first indication domain and a second indication domain, the first indication information is comprised in the first indication domain, and a basis vector corresponding to each resource unit is comprised in the second indication domain.

32. A method for determining a channel state information (CSI) feedback, performed by a network device, comprising:
receiving first indication information sent by a terminal, wherein the first indication information is used to indicate a resource unit based on which a basis vector is selected in the CSI feedback to the network device, and the basis vector comprises at least one of a beam basis vector or a frequency domain basis vector.

33. The method of claim 32, wherein the resource unit comprises at least one of: one CSI reference signal (RS) resource, a plurality of CSI RS resources, one port group of one CSI RS resource, or a plurality of port groups of one CSI RS resource.

34. The method of claim 32, wherein the first indication information comprises any one of:
a group identification of at least one CSI RS set;
a group identification of at least one CSI RS resource;
a group identification of a port group of a CSI RS resource; or
a group identification of a plurality of port groups of a CSI RS resource.

35. The method of claim 34, further comprising:
sending second indication information to the terminal, wherein the second indication information is used to indicate a mapping relationship between the group identification of each port group and a port identification.

36. The method of claim 32, wherein receiving the first indication information sent by the terminal comprises:
receiving the CSI feedback sent by the terminal, wherein the CSI feedback comprises a first indication domain and a second indication domain, the first indication information is comprised in the first indication domain, and a basis vector corresponding to each resource unit is comprised in the second indication domain.

37. A communication device, comprising:
a transceiver module, configured to send first indication information to a terminal, wherein the first indication information is used to indicate a resource unit based on which a basis vector is selected in the CSI feedback to the terminal, , and the basis vector comprises at least one of a beam basis vector or a frequency domain basis vector.

38. A communication device, comprising:
a transceiver module, configured to receive first indication information sent by a network device, wherein the first indication information is used to indicate a resource unit based on which a basis vector is selected in the CSI feedback to the terminal, and the basis vector comprises at least one of a beam basis vector or a frequency domain basis vector.

39. A communication device, comprising:
a transceiver module, configured to send first indication information to a network device, wherein the first indication information indicates a resource unit based on which a basis vector is selected in the CSI feedback to the network device, and the basis vector comprises at least one of a beam basis vector or a frequency domain basis vector.

40. A communication device, comprising:
a transceiver module, configured to receive first indication information sent by a terminal, wherein the first indication information is used to indicate a resource unit based on which a basis vector is selected in the CSI feedback to the network device, , and the basis vector comprises at least one of a beam basis vector or a frequency domain basis vector.

41. A communication device, comprising a processor and a memory for storing a computer program, wherein the processor is configured to execute the computer program in the memory, to cause the device to realize the method according to any one of claims 1 to 13, the method according to any one of claims 14 to 26, the method according to any one of claims 27 to 31, or the method according to any one of claims 32 to 36.

42. A computer readable storage medium for storing instructions, wherein when the instructions are performed, the method according to any one of claims 1 to 13 is realized, or the method according to any one of claims 14 to 26 is realized, or the method according to any one of claims 27 to 31 is realized, or the method according to any one of claims 32 to 36 is realized.
